(19) Europäisches Patentamt European Patent Office Office européen des brevets

(11) **EP 3 614 597 B1**

(12) **EUROPEAN PATENT SPECIFICATION**

(45) Date of publication and mention of the grant of the patent:
**25.08.2021 Bulletin 2021/34**

(51) Int Cl.:
***H04L 1/18*** *(2006.01)*    ***H04L 1/12*** *(2006.01)*

(21) Application number: **17908463.7**

(22) Date of filing: **05.05.2017**

(86) International application number:
**PCT/CN2017/083359**

(87) International publication number:
**WO 2018/201504 (08.11.2018 Gazette 2018/45)**

(54) **DATA FEEDBACK METHOD AND RELATED DEVICE**

DATENRÜCKKOPPLUNGSVERFAHREN UND ZUGEHÖRIGE VORRICHTUNG

PROCÉDÉ DE RENVOI DE DONNÉES ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.02.2020 Bulletin 2020/09**

(73) Proprietor: **Huawei Technologies Co., Ltd.**
**Longgang District**
**Shenzhen, Guangdong 518129 (CN)**

(72) Inventors:
• **NAN, Fang**
**Shenzhen**
**Guangdong 518129 (CN)**

• **YU, Zheng**
**Shenzhen**
**Guangdong 518129 (CN)**

(74) Representative: **Gill Jennings & Every LLP**
**MTH**
**The Broadgate Tower**
**20 Primrose Street**
**London EC2A 2ES (GB)**

(56) References cited:
**WO-A1-2013/141603    WO-A2-2016/072688**
**CN-A- 102 263 623    CN-A- 104 125 045**
**CN-A- 105 634 689    CN-A- 106 162 897**
**US-A1- 2016 128 055    US-A1- 2016 270 038**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

This application relates to the field of wireless communications technologies, and in particular, to a data feedback method and a related device.

### BACKGROUND

In a wireless communications system such as long term evolution (long term evolution, LTE), to improve reliability of data transmission, a repeat request technology, such as a hybrid automatic repeat request (hybrid automatic repeat request, HARQ) mechanism, is used to transmit data. A base station may indicate resource allocation of uplink data for user equipment ( user equipment, UE) by using downlink control information ( downlink control information, DCI) in a physical downlink control channel ( physical downlink control channel, PDCCH), and the UE transmits an uplink data packet based on the resource allocation. For an HARQ process, if an uplink data packet received by the base station is correct, and does not need to be retransmitted, the base station feeds back an acknowledgement ( acknowledgement, ACK) to the UE. Otherwise, the base station feeds back a negative acknowledgement ( negative acknowledgment, NACK) to indicate retransmission. The ACK or NACK feedback may be carried on a physical HARQ indicator channel ( physical hybrid ARQ indicator channel, PHICH), so that data can be retransmitted when a current data transmission attempt fails. In addition, in machine type communication ( machine type communication, MTC), various devices having particular perceptive, computing, execution, and communication capabilities are deployed to obtain information of the physical world, and information transmission, coordination, and processing are implemented by using a network, thereby implementing interconnections between people and things and between things and things. A maximum transmit bandwidth and a maximum receive bandwidth that can be supported by the UE in MTC are 1.4 MHz, including a narrowband. However, a frequency width occupied by the PDCCH and the PHICH in the LTE system may be an entire system bandwidth, and may be up to 20 MHz. When the receive bandwidth of the UE is less than the system bandwidth, the UE cannot receive the DCI carried on the PDCCH and the ACK or NACK carried on the PHICH.

Currently, to enable the UE to receive the DCI, a machine type communication physical downlink control channel ( MTC physical downlink control channel, MPDCCH) is used to carry the DCI of the UE, and the DCI may include a 1-bit new data indicator (new data indicator, NDI) used to indicate whether the uplink data scheduled by using the DCI is newly sent data or previously sent data retransmitted in this process. If the NDI bit is reversed relative to an NDI bit in a DCI previously sent by the base station in this HARQ process, it indicates that the UE needs to send new uplink data; and if the NDI bit is not reversed, it indicates that the UE needs to retransmit data previously sent in this HARQ process. Consequently, an ACK or NACK feedback function that is of the base station and that indicates whether the uplink data is correctly received may be indicated by using the NDI bit in the DCI carried on the MPDCCH, so that the UE does not need to receive the ACK or NACK carried on the PHICH.

However, in the foregoing feedback manner, a DCI carried on each MPDCCH can only correspond to one UE. To be specific, one piece of DCI can be used to feed back whether uplink data of only one HARQ process of one UE is correctly received. If whether uplink data of a plurality of UEs is correctly received needs to be fed back, the base station needs to send a plurality of pieces of DCI, which occupies a relatively large quantity of MPDCCH resources, and causes high resource overheads and relatively low feedback efficiency.

WO2016072688A2 relates to method for receiving ACK/NACK signal and MTC device. US2016270038A1 relates to transmissions of downlink control channels for low cost UEs.

### SUMMARY

This application provides a data feedback method and a related device, so that feedback information of a plurality of pieces of uplink data can be carried by using one piece of downlink control information, helping resolve a problem of high overheads of feedback resources for feeding back whether the uplink data is correctly received and low feedback efficiency.

The invention is carried out in accordance with the appended claims.

Bits of the first downlink control information may include X bit groups. To be specific, the bits of the first downlink control information constitute the X bit groups, and X is a positive integer. Further, the X bit groups include the first bit group, and one or more bits included in each of the X bit groups may be associated with one or more physical resource blocks in a narrowband in a system bandwidth. The first bit is used to indicate whether the uplink data is correctly received, or to indicate whether new uplink data is sent by the terminal device.

The uplink data feedback method may be specifically applied to an entity that receives uplink data and feeds back whether the uplink data is correctly received or whether new uplink data is sent, and the entity may be a network device, such as a base station or a terminal device.

The association relationship between the bit included in the bit group and the physical resource block in the narrowband may be obtained through pre-configuration, for example, agreed on by using a protocol. Alternatively, the network device may also notify a terminal device of the association relationship. For example, the network device may dynamically or semi-statically notify the terminal device by using signaling.

The first bit group may be notified by the network device to the terminal device. For example, the network device may dynamically or semi-statically notify, by using signaling, the terminal device of information used to indicate the first bit group.

The association relationship between the bit group and the narrowband may be obtained through pre-configuration. For example, the association relationship between the bit group and the narrowband may be agreed on by using a protocol, and the first bit group is determined based on a narrowband occupied by the uplink data. This is not limited in this application. In this way, feedback information of a plurality of pieces of uplink data can be carried by using one piece of downlink control information, helping resolve a problem of high overheads of feedback resources for feeding back whether the uplink data is correctly received and low feedback efficiency.

In the technical solutions claimed in this application, the terminal device may send the uplink data to the network device. The network device may determine the first bit group in the first DCI and the first bit in the first bit group after receiving the uplink data, and the first bit is used to indicate whether the uplink data is correctly received, or whether the new uplink data is sent. After receiving the first DCI, the terminal device may determine, as indicated by the first bit, whether to retransmit the data, so that feedback information of a plurality of pieces of uplink data can be carried by using one piece of DCI, helping resolve a problem of high overheads of feedback resources for feeding back whether the uplink data is correctly received and low feedback efficiency.

**BRIEF DESCRIPTION OF DRAWINGS**

FIG. 1 is an architectural diagram of a communications system according to an embodiment of the present invention;

FIG. 2a is a schematic diagram of a first bit group and a first bit according to an embodiment of the present invention;

FIG. 2b is a schematic diagram of an association relationship between a bit in a bit group and a PRB in a narrowband according to an embodiment of the present invention;

FIG. 3 is a schematic interactive diagram of an uplink data feedback method according to an embodiment of the present invention;

FIG. 4 is a schematic interactive diagram of another feedback method for uplink data according to an embodiment of the present invention;

FIG. 5a is a schematic diagram of an association relationship between a bit group and a narrowband according to an embodiment of the present invention;

FIG. 5b is a schematic diagram of another association relationship between a bit group and a narrowband according to an embodiment of the present invention;

FIG. 6 is a schematic interactive diagram of still another feedback method for uplink data according to an embodiment of the present invention;

FIG. 7 is a schematic interactive diagram of still another feedback method for uplink data according to an embodiment of the present invention;

FIG. 8 is a schematic diagram of still another association relationship between a bit group and a narrowband according to an embodiment of the present invention.

FIG. 9 is a schematic structural diagram of a network device according to an embodiment of the present invention;

FIG. 10 is a schematic structural diagram of a terminal device according to an embodiment of the present invention;

FIG. 11 is a schematic structural diagram of an uplink data feedback system according to an embodiment of the present invention;

FIG. 12 is a schematic structural diagram of another network device according to an embodiment of the present invention; and

FIG. 13 is a schematic structural diagram of another terminal device according to an embodiment of the present invention.

**DESCRIPTION OF EMBODIMENTS**

The following describes the embodiments of the present invention with reference to the accompanying drawings in the embodiments of the present invention.

It should be understood that the technical solutions of this application may be specifically applied to various communication networks, such as: a global system for mobile communications ( global system for mobile communications, GSM), a code division multiple access ( code division multiple access, CDMA) system, a wideband code division multiple access ( wideband code division multiple access, WCDMA) system, a time division-synchronous code division multiple access ( time division-synchronous code division multiple access, TD-SCDMA) system, a universal mobile telecommunications system ( universal mobile telecommunications system, UMTS), a long term evolution ( long term evolution, LTE) network and the like. With continuous development of communication technologies, the technical solutions of this application may further be applied to a future network, such as a fifth generation mobile communication technology ( the fifth generation mobile communication technology, 5G) network, which may be referred to as a new radio ( new radio, NR) network, or may be applied to a D2D (device to device) network, an M2M (machine to machine) network, and the like.

A network device related to this application may be an entity configured to send or receive a signal on a network side. For example, the network device may be a base station, or may be a transmission point ( transmission point, TP), a transmission and receiver point ( transmission and receiver point, TRP), a relay device, or another network device having a function of a base station, or a terminal device. Communication related in the technical solutions of this application may be between a base station and a terminal device, or may be between a terminal device and a terminal device, such as communication in a D2D network. Alternatively, the technical solutions of this application may be applied to another scenario, for example, any scenario in which an entity sends uplink data, and another entity receives the uplink data and feeds back whether the uplink data is correctly received.

In this application, the terminal device may also be referred to as user equipment ( user equipment, UE), a mobile station ( mobile station, MS), a terminal (terminal), a mobile terminal (mobile terminal), a subscriber unit ( subscriber unit, SU), a subscriber station ( subscriber station, SS), a mobile station ( mobile station, MB), a remote station ( remote station, RS), an access point ( access point, AP), a remote terminal ( remote terminal, RT), an access terminal ( access terminal, AT), a user terminal ( user terminal, UT), a user agent ( user agent, UA), a terminal device ( user device, UD), and the like. This is not limited in this application. The terminal may be a wireless terminal or a wired terminal. The wireless terminal may be a device providing voice and/or data connectivity for a user, and may communicate with one or more core networks through a radio access network (such as RAN, radio access network). For example, the terminal device may be UE that performs an MTC service, bandwidth-reduced low-complexity ( bandwidth-reduced low-complexity, BL) UE, non-BL UE, a coverage enhancement ( coverage enhancement, CE) UE, or the like.

In this application, a base station may be a device communicating, on an air interface in an access network, with a terminal by using one or more sectors, and may coordinate attribute management for the air interface. For example, the base station may be a base station, such as a base transceiver station ( base transceiver station, BTS), in GSM or CDMA; or a base station, such as a NodeB, in WCDMA; or an evolved NodeB, such as an eNB or e-NodeB (evolutional Node B), in LTE; or a base station, such as a gNB, in a 5G system; or a base station in a future network. This is not limited in application. In this application, signaling related in embodiments of this application may be high layer signaling, such as a system message, or a broadcast message, or radio resource control (radio resource control, RRC) signaling, or medium access control (medium access control, MAC) signaling. Optionally, the signaling may alternatively be physical layer signaling, such as downlink control information (downlink control information, DCI) signaling. This is not limited in this application.

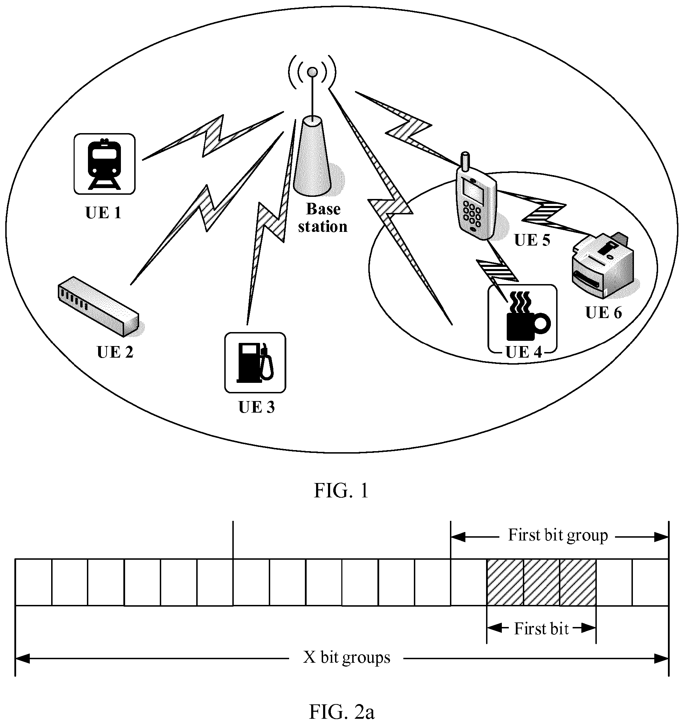

An application scenario of this application is described in the following. In this application, that the network device is a base station is used as an example, to be specific, communication between the base station and a terminal device is used as an example for description. FIG. 1 is an architectural diagram of a communications system according to an embodiment of the present invention. Specifically, as shown in FIG. 1, the communications system includes a base station and terminal devices (UE 1 to UE 6 are shown in the figure), various communications systems, such as the 5G system, which may be referred to as an NR system, or the LTE system in the foregoing wireless communications systems, may be used for communication between the base station and the terminals, or between the terminals, to implement information transmission.

For example, in the communications system, the UE 1 to the UE 6 may send uplink data to the base station, and the base station receives the uplink data sent by the UE 1 to the UE 6, and may feed back, to corresponding UEs, whether the uplink data is correctly received or whether new uplink data needs to be sent. In addition, the UE 4 to the UE 6 may also constitute a communications system. For another example, in the communications system, the UE 4 and the UE 6 may send uplink data to the UE 5, and the UE 5 receives the uplink data sent by the UE 4 and the UE 6, and may feed back, to the UE 4 and the UE 6 in a particular manner, whether the uplink data is correctly received or whether new uplink data needs to be sent.

In this application, when giving the feedback, the terminal device may implement the feedback by using downlink control information such as DCI, and the downlink control information may be carried on a control channel. The control channel related in this application is mainly configured to carry resource scheduling information and other control information. For example, the control channel may be a physical downlink control channel ( physical downlink control channel, PDCCH), an enhanced physical downlink control channel ( enhanced physical downlink control channel, EPDCCH), a new radio physical downlink control channel ( new radio physical downlink control channel, NR-PDCCH), a machine type communication physical downlink control channel ( MTC physical downlink control channel, MPDCCH), or another control channel that is defined as the network evolves and that has the foregoing function. In this application, that the downlink control information is DCI, and the control channel is an MPDCCH is used as an example, to be specific, that the MPDCCH carries the DCI is used as an example for description. In this application, the channel may also be referred to as a signal or another name. This is not limited in this application.

Optionally, the DCI used for feedback, namely, first DCI, may include a plurality of bit groups, for example, X bit groups, and each bit group may include one or more bits, so that the base station can feed back, based on the one or more bits of each bit group, whether the uplink data is correctly received or whether new uplink data needs to be sent. X is an integer greater than or equal to 1. Further, it is assumed that one or more bits used for feedback is a first bit. FIG. 2a is a schematic diagram of X bit groups constituted by bits of the first DCI and a first bit in a first bit group. Optionally, the first bit may include one or more bits.

For example, the first bit used for feedback may indicate an ACK or NACK (to be specific, indicate whether the data is correctly received). If a value of the first bit is 1 (or 0), the first bit indicates an ACK, to be specific, the base station correctly receives the uplink data sent by the terminal device; or if a value of the first bit is 0 (or 1), the first bit indicates an NACK, to be specific, the base station does not correctly receive the uplink data. For another example, the first bit may alternatively be an NDI (to be specific, indicating whether new uplink data needs to be sent). For example, if the value of the first bit is reversed relative to a value of an NDI bit in DCI that is previously sent by the base station in this HARQ process and that is used to schedule the uplink data, namely, a second DCI, it indicates that the terminal device may send new uplink data; or if the value of the first bit is not reversed, it indicates that the terminal device needs to retransmit the uplink data previously sent in this HARQ process, to be specific, perform data retransmission.

The uplink data can be carried on a physical uplink shared channel ( physical uplink shared channel, PUSCH). A narrowband may include 6 continuous physical resource blocks ( physical resource block, PRB) on frequency. Resources occupied by the uplink data may use a PRB as a resource unit, and the PRB occupied by the uplink data may be a PRB in a frequency range of a narrowband. Optionally, the resources occupied by the uplink data may alternatively use another resource unit. Alternatively, a narrowband may include another quantity of PRBs. This is not limited in this application.

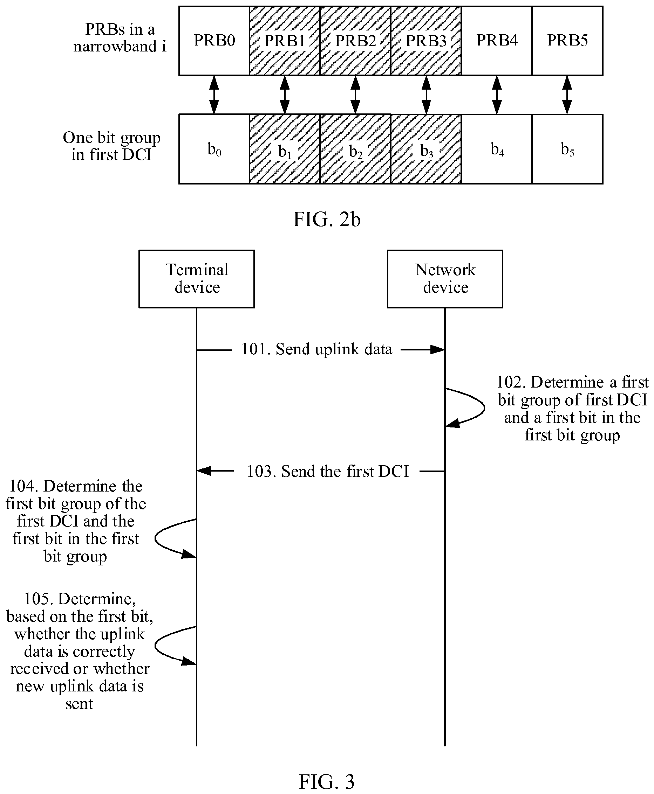

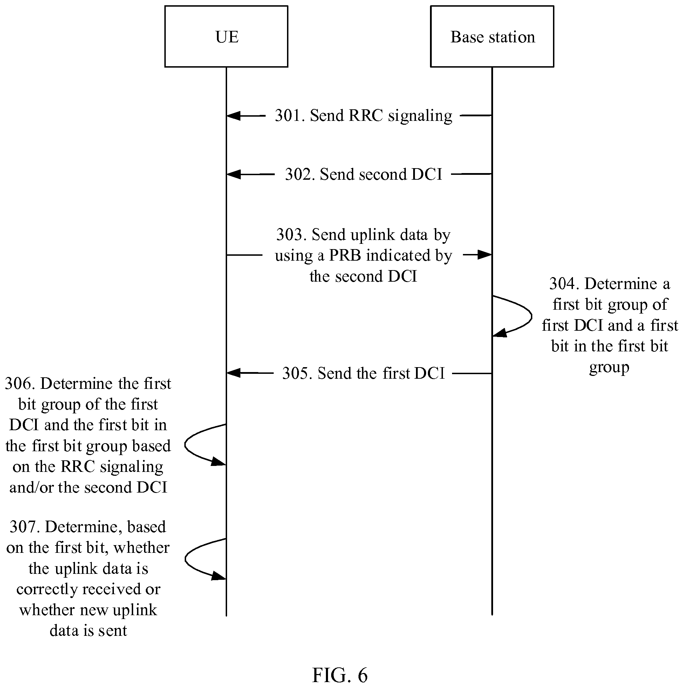

Further, an association relationship between a PRB in a narrowband and a bit in a bit group may be preconfigured. For example, the PRB in the narrowband and the bit in the bit group may have a one-to-one association relationship. For example, FIG. 2b is a schematic diagram of an association relationship between a bit in a bit group and a PRB in a narrowband. FIG. 2b illustrates an association relationship between a bit in a bit group of the first DCI and a PRB in a narrowband such as a narrowband i. Optionally, narrowbands within a frequency range of a system bandwidth may be numbered as narrowband indexes in ascending order or descending order of frequency. Assuming that a quantity of narrowbands included in the frequency range of the system bandwidth is $N_{NB}$, a value range of the narrowband index may be 0 to $N_{NB}-1$. For example, the narrowband i may represent a narrowband having an index of i. PRBs within a narrowband are PRBs included in a frequency range of the narrowband, and 6 continuous PRBs included in a narrowband in terms of frequency may be numbered as PRB indexes within the narrowband in ascending order or descending order of frequency, and a value range of the PRB index is 0 to 5. For example, PRBj indicates a PRB having an index of j. As shown in FIG. 2b, 6 bits $b_0, b_1, b_2, b_3, b_4, b_5$ included in a bit group in the first DCI may be respectively associated with 6 PRBs in the narrowband i: a PRB 0, a PRB 1, a PRB 2, a PRB 3, a PRB 4, a PRB 5, and a PRB 6. Further, optionally, bits included in different bit groups of the first DCI may be associated with PRBs in different narrowbands. To be specific, each bit group in the first DCI may be associated with one narrowband, and different bit groups of the first DCI may be associated with different narrowbands.

As shown in shaded parts in FIG. 2b, it is assumed that PRB indexes of PRBs of a PUSCH in the narrowband i are 1, 2, and 3, and positions of the PRBs in the narrowband are the second PRB, the third PRB, and the fourth PRB starting from a PRB with a relatively low frequency. If the network device determines that the indexes of the PRBs are 1, 2 and 3, bits $b_1, b_2, b_3$ in the first bit group in the first DCI may be determined as the first bit based on an association relationship between the bits $b_1, b_2, b_3$ in the first bit group in the first DCI and the PRBs having the indexes of 1, 2 and 3. Alternatively, if the network device determines the second PRB, the third PRB, and the fourth PRB starting from the PRB with the relatively low frequency, the network device may determine bits $b_1, b_2, b_3$ in the first bit group in the first DCI as the first bit based on an association relationship between the second PRB, the third PRB, and the fourth PRB and the bits $b_1, b_2, b_3$ in the first bit group in the first DCI.

Optionally, a quantity of the bits included in the first bit may be the same as a quantity of PRBs of a PUSCH that carries the uplink data. Further, optionally, when the quantity N of the PRBs of the PUSCH that carries the uplink data is greater than 1, the first bit includes N bits, and values of the N bits may be the same, to improve reliability of data feedback. As shown in FIG. 2b, when there are three PRBs, namely, the PRB 1, the PRB 2, and the PRB 3, of the PUSCH that carries the uplink data, the first bit includes 3 bits, namely, $b_1, b_2, b_3$, and the 3 bits have a same value. In this application, the manner for determining the PRB indexes and the narrowband indexes may alternatively be another manner. This is not limited in this application.

This application discloses an uplink data feedback method, a network device, a terminal device, and a system, so that feedback information of a plurality of pieces of uplink data can be carried by using one piece of DCI, helping resolve a problem of high overheads of feedback resources for feeding back whether the uplink data is correctly received and low feedback efficiency. Detailed descriptions are separately provided below in detail.

FIG. 3 is a schematic interactive diagram of an uplink data feedback method according to an embodiment of the present invention. Specifically, as shown in FIG. 3, the uplink data feedback method according to this embodiment of the present invention may include the following steps.

101: A terminal device sends uplink data to a network device.

102: The network device determines a first bit group in first DCI and a first bit in the first bit group.

Bits of the first DCI constitute at least one bit group. For example, the bits of the first DCI include X bit groups, and X is a positive integer. One or more bits included in each of the X bit groups are associated with one or more PRBs in a narrowband in a system bandwidth, and the first bit is used to indicate whether the uplink data is correctly received, or to indicate whether new uplink data is sent by the terminal device. Specifically, the network device may receive the uplink data sent by the terminal device, to determine a feedback bit group (namely, the first bit group) and a feedback bit (namely, the first bit in the first bit group) in DCI (namely, the first DCI) that is used to feed back whether the uplink data is correctly received or whether the terminal device needs to send the new uplink data.

Optionally, an association relationship between a bit included in a bit group and a PRB in a narrowband may be obtained through pre-configuration. For example, the association relationship between the bit included in the bit group and the PRB in the narrowband may be shown in FIG. 2b, and details are not described herein again. Further, Optionally, each bit group in the first DCI may be associated with one narrowband, and different bit groups of the first DCI may be associated with different narrowbands. In this way, by determining the PRB occupied by the uplink data, to be specific, a position of the PRB that carries the uplink data sent by the terminal device and that is in the narrowband, the network device can determine, based on the association relationship between the bit included in the bit group and the PRB in the narrowband, a bit that is in the bit group and associated with the PRB occupied by the uplink data, and then obtain, based on the determined first bit group, the associated bit in the first bit group as the first bit.

Information about the PRB occupied by the uplink data may be notified to the terminal device by the network device. For example, the network device may send, to the terminal device through scheduling DCI (namely, second DCI), information of a PUSCH resource, such as a PRB, occupied by the uplink data. Optionally, the first bit group used to give data feedback may be notified to the terminal device by the network device. For example, the network device may dynamically or semi-statically notify the terminal device by using signaling. Alternatively, the first bit group may be predefined. For example, an association relationship between the bit group and the narrowband may be predefined, and the first bit group is determined based on a narrowband occupied by the uplink data. This is not limited in this embodiment of the present invention.

103: The network device sends the first DCI.

104: The terminal device determines the first bit group in the first DCI and the first bit in the first bit group.

Optionally, after determining the first bit group and the first bit, the network device may further scramble cyclic redundancy check ( cyclic redundancy check, CRC) of the first DCI by using a scrambling code determined in a preset manner, and send the scrambled first DCI to ensure that the terminal device that sends the uplink data can receive the first DCI. The scrambling code for scrambling may be determined based on a position of a narrowband in which the PRB occupied by the uplink data is located, for example, based on an index of the narrowband or based on the index of the narrowband and narrowband offset information. This is not limited in this embodiment of the present invention.

Further, optionally, the terminal device may descramble, by using the scrambling code determined in a preset manner, the CRC of the DCI sent by the base station, to obtain the first DCI. The manner of determining, by the terminal device, the scrambling code for descrambling may be the same as the manner of determining, by the network device, the scrambling code for scrambling.

Further, after obtaining the first DCI, the terminal device may determine the first bit group of the first DCI and the first bit. A manner of determining, by the terminal device, the first bit group and the first bit may be the same as a manner of determining, by the network device, the first bit group and the first bit. Details are not described herein again.

105: The terminal device determines, based on the first bit, whether the uplink data is correctly received or whether new uplink data is sent.

Specifically, after determining the first bit, the terminal device may determine, based on feedback information indicated by the first bit, whether the uplink data is correctly received or whether the new uplink data is sent. The first bit may indicate an ACK or NACK by using 0 or 1 or by using an NDI. For details, refer to the foregoing related descriptions, and details are not described herein again.

In this embodiment of the present invention, the terminal device may send the uplink data to the network device. The network device may determine the first bit group in the first DCI and the first bit in the first bit group after receiving the uplink data, and the first bit is used to indicate whether the uplink data is correctly received, or whether the new uplink data is sent. After receiving the first DCI, the terminal device may determine, as indicated by the first bit, whether to retransmit the data, so that feedback information of a plurality of pieces of uplink data can be carried by using one piece of DCI, helping resolve a problem of high overheads of feedback resources for feeding back whether the uplink data is correctly received and low feedback efficiency.

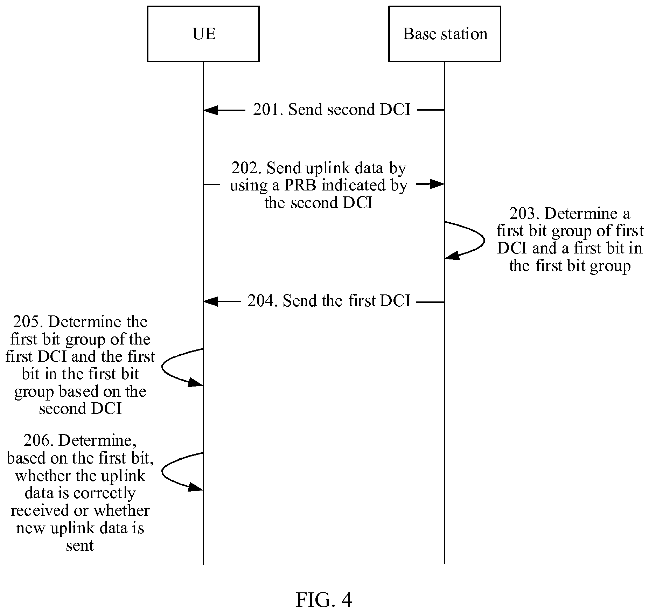

FIG. 4 is a schematic interactive diagram of another feedback method for uplink data according to an embodiment of the present invention. Specifically, in this embodiment of the present invention, an example in which the network device is a base station, to be specific, communication between the base station and UE, is used for description. As shown in FIG. 4, the uplink data feedback method according to this embodiment of the present invention may include the following steps.

201: A base station sends second DCI, where the second DCI includes at least one of information about a PRB carrying uplink data of the UE, indication information of a quantity X of bit groups in first DCI, information about a first bit group, or narrowband offset information.

202: The UE sends the uplink data to the base station by using the PRB indicated by the second DCI.

Specifically, the second DCI may be used to schedule the uplink data, and the second DCI may include resource allocation, such as PRB information and a modulation and coding scheme, of a PUSCH carrying the uplink data. The PRB information may include a PRB index, and may further include an index of a narrowband in which the PRB is located. The PRB information may be used to indicate a specific position of the PRB carrying the uplink data. In this way, the UE may determine, based on the second DCI, the PRB carrying the uplink data, and transmit the uplink data by using the PRB. 203: The base station determines a first bit group in first DCI and a first bit in the first bit group.

Bits of the first DCI constitute at least one bit group, and one or more bits included in each bit group in the first DCI may be associated with one or more physical resource blocks in a narrowband. An association relationship between the bit included in the bit group and the PRB in the narrowband may be obtained through pre-configuration, and details are not described herein again. The first bit may be used to indicate whether the uplink data is correctly received, or to indicate whether the UE sends new uplink data. Specifically, the base station may receive the uplink data sent by the UE, and determine, based on the position of the PRB of the PUSCH occupied by the uplink data in the narrowband (to be specific, a specific PRB) and the association relationship between the bit in the bit group in the first DCI and the PRB in the narrowband, a bit that is in the bit group in the first DCI and associated with the PRB occupied by the uplink data. Then the associated bit in the first bit group is obtained as the first bit based on the determined first bit group. Optionally, the position of the PRB in the narrowband may be determined by using the PRB index in the narrowband.

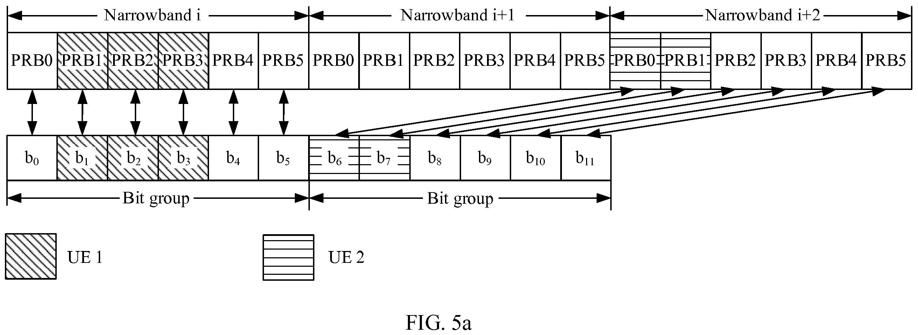

X may be used to indicate the quantity of bit groups included in the first DCI, and may further be used to indicate a quantity of narrowbands associated with all the bit groups in the first DCI. Optionally, the indication information of X may be used to indicate a value of X, and a maximum value of X may be a value fixed in a protocol. For example, the maximum value of X may be 1, 2, 3 or 4. For example, if the maximum value of X is 1, the second DCI may not need to include the indication information of X. For another example, if the maximum value of X is 4, the value of X may be any one of 1 to 4, and the second DCI may include the indication information of X. For example, if the second DCI indicates that the value of X is 2, it may indicate that the first DCI has 2 bit groups. Further, the information about the first bit group may be used to indicate the first bit group in all the bit groups constituted by the bits of the first DCI; and the narrowband offset information may indicate a narrowband offset between a narrowband associated with the first bit group and a narrowband associated with a bit group constituted by low (or high) 6 bits of the first DCI. For example, if the narrowband associated with the first bit group is a narrowband 0, the narrowband associated with the bit group constituted by the low (or high) 6 bits of the first DCI is a narrowband 3, the narrowband offset information is 3, which may indicate an offset by 3 narrowbands. Further, the base station may also determine the first bit group in all the bit groups constituted by the bits of the first DCI, to be specific, determine a position of the first bit group in which the first bit is located, to determine a position of the first bit in all the bits of the first DCI. Optionally, an order of determining, by the base station, the bit associated with the PRB occupied by the uplink data and determining, by the base station, the first bit group is not limited. For example, the bit associated with the PRB occupied by the uplink data may be determined first, and then the first bit group in which the bit associated with the PRB occupied by the uplink data is located is determined; or the first bit group may be determined first, and then the bit that is associated with the PRB occupied by the uplink data and that is in the first bit group are determined; or the first bit group and the bit associated with the PRB occupied by the uplink data may be determined simultaneously. This is not limited in this application. Optionally, the second DCI may further include the information about the first bit group and the indication information of the quantity X of the bit groups of the first DCI. Therefore, when determining the first bit group in the first DCI, the base station may determine the first bit group based on the information about the first bit group. To be specific, in this manner, the information about the first bit group indicates the first bit group in all the bit groups, so that the base station may directly determine the first bit group. For example, the bits of the first DCI constitute 2 bit groups in total, and the 2 bit groups associate with 2 narrowbands, the information about the first bit group may be 1 bit, to indicate one of the 2 bit groups, and the indicated bit group is the first bit group. Further, in this manner, the narrowbands associated with all the bit groups in the first DCI may be continuous narrowbands or discontinuous narrowbands in terms of frequency. As shown in FIG. 5a, if the bit groups of the first DCI are associated with discontinuous narrowbands, it is assumed that all the bits of the first DCI constitute 2 bit groups, and the 2 bit groups are associated with discontinuous narrowbands and used to schedule uplink data of UE 1 and UE 2 separately. In addition, it is assumed that PUSCH resources occupied by the UE 1 are a PRB 1, a PRB 2, and a PRB 3 in a narrowband i, and PUSCH resources occupied by the UE 2 are a PRB 0 and a PRB 1 in a narrowband i+2, information about a first bit group in the second DCI that is used to allocate the PUSCH resources for the UE 1 is 0, indicating that a bit group constituted by bits $b_0$ to $b_5$ is the first bit group of the UE 1, and information about a first bit group in the second DCI that is used to allocate the PUSCH resources for the UE 2 is 1, indicating that a bit group constituted by bits $b_6$ to $b_{11}$ is the first bit group of the UE 2. The first DCI indicates, to the UE 1 and the UE 2, whether the uplink data is correctly received, or whether new uplink data is sent. $b_1$, $b_2$, and $b_3$ are the first bit of the UE 1, and $b_6$ and $b_7$ are the first bit of the UE 2. In this way, the base station can determine the first bit group based on the information about the first bit group. If the bit groups of the first DCI are associated with continuous narrowbands, a manner of determining the first bit group based on the information about the first bit group is similar to the manner of determining the first bit group when the bit groups of the first DCI are associated with discontinuous narrowbands, and details are not described herein again.

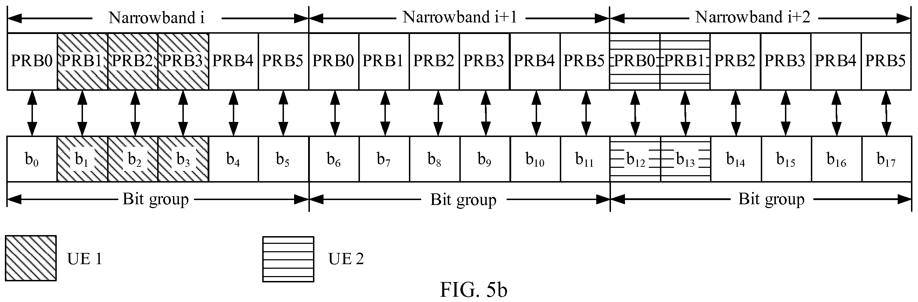

Optionally, the second DCI may further include the narrowband offset information and the indication information of the quantity X of the bit groups of the first DCI. Therefore, when determining the first bit group in the first DCI, the base station may determine the first bit group based on the narrowband offset information. For example, it is assumed that the bits of the first DCI constitute three bit groups in total, and the three bit groups are associated with three narrowbands, and the narrowband offset information may be 2 bit, to indicate that which one of 0, 1, and 2 is a narrowband offset between a narrowband associated with the first bit group and a narrowband associated with a bit group constituted by low (or high) 6 bits of the first DCI. In this manner, the narrowbands associated with all the bit groups of the first DCI may be continuous narrowbands in terms of frequency. As shown in FIG. 5b, it is assumed that all the bits in the first DCI constitute 3 bit groups, and the 3 bit groups are associated with continuous narrowbands to schedule uplink data of UE 1 and UE 2. In addition, it is assumed that PUSCH resources occupied by the UE 1 are a PRB 1, a PRB 2, and a PRB 3 in a narrowband i, and PUSCH resources occupied by the UE 2 are a PRB 0 and a PRB 1 in a narrowband i+2. Assuming that the narrowband offset information indicates a narrowband offset between a narrowband associated with the first bit group and a narrowband associated with a bit group constituted by low 6 bits of the first DCI, narrowband offset information in the second DCI that is used to allocate PUSCH resources to the UE 1 is 0, indicating that a bit group constituted by bits $b_0$ to $b_5$ is the first bit group of the UE 1, and narrowband offset information in the second DCI that is used to allocate PUSCH resources to the UE 2 is 2, indicating that a bit group constituted by bits $b_{12}$ to $b_{17}$ is the first bit group of the UE 2. The first DCI indicates, to the UE 1 and the UE 2, whether the uplink data is correctly received, or whether new uplink data is sent. $b_1$, $b_2$, and $b_3$ are the first bit of the UE 1, and $b_{12}$ and $b_{13}$ are the first bit of the UE 2. In this way, the base station can determine the first bit group based on the narrowband offset information.

204. The base station sends the first DCI.

205: The UE determines the first bit group in the first DCI and the first bit in the first bit group based on the second DCI.

206: The UE determines, based on the first bit, whether the uplink data is correctly received or whether new uplink data is sent.

Specifically, after determining the first bit group and the first bit, the base station may send the first DCI. Optionally, before sending the first DCI, the base station may further scramble CRC of the first DCI. For example, the base station may determine, based on an index of a narrowband in which the PRB carrying the uplink data is located and the narrowband offset information, a scrambling code used for scrambling, and send the scrambled first DCI to the UE after scrambling the CRC of the first DCI by using the scrambling code.

Optionally, when the quantity of bit groups constituted by the bits of the first DCI is one, to be specific, when X is 1, the base station may determine a scrambling code of CRC of the first DCI based on an index of a narrowband in which the PRB of the PUSCH carrying the uplink data is located. In this scenario, the second DCI may not include the indication information of X, the information about the first bit group, and the narrowband offset information. Specifically, it is assumed that valid payload bits (information bits, namely, the bits of the first DCI) of the first DCI are $a_0, a_1, a_2, a_3, ..., a_{A-1}$, and check bits (namely, bits of the CRC) of the first DCI are $p_0, p_1, p_2, p_3, ..., p_{L-1}$ where A is a size of valid payload, and L is a quantity of the check bits, for example, L=16. Further, the valid payload bits and the check bits of the first DCI may be connected, to obtain $b_0, b_1, b_2, b_3, ..., b_{B-1}$, where B = A+L. Further, the check bits of the CRC of the first DCI in the bits $b_0, b_1, b_2, b_3, ..., b_{B-1}$ may be scrambled, to obtain bits $c_0, c_1, c_2, c_3, ..., c_{B-1}$. A relationship between bits $c_k$ and $b_k$ may be as follows:

$$c_k = b_k \,,$$

when k=0, 1, 2, ..., or A-1

$$c_k = \left(b_k + x_{NB,k-A}\right) \bmod 2,$$

when k=A, A+1, A+2, ..., or A+15 $x_{NB,0}, x_{NB,1}, ..., x_{NB,15}$ is the scrambling code determined based on the index of the narrowband in which the PRB of the PUSCH carrying the uplink data. For example, $x_{NB,0}, x_{NB,1}, ..., x_{NB,15}$ may be 16 binary digits indicating the narrowband index. For example, when the index of the narrowband in which the PRB of the PUSCH is located is 15, a value of $x_{NB,0}, x_{NB,1}, ..., x_{NB,15}$ is 0000 0000 0000 1111.

Optionally, when the quantity of bit groups constituted by the bits of the first DCI is greater than or equal to 1, to be specific, when X is greater than or equal to 1, the base station may determine a scrambling code of CRC of the first DCI based on an index of a narrowband in which the PRB of the PUSCH carrying the uplink data is located and the narrowband offset information. In this scenario, the second DCI needs to include the indication information of X and the narrowband offset information. Further, optionally, the second DCI may further include information of the first bit. A relationship between bits $c_k$ and $b_k$ may be as follows:

$c_k = b_k$ , when k=0, 1, 2, ..., or A-1

$$c_k = \left(b_k + x_{NB,k-A} - x_{NBOffset,k-A}\right) \bmod 2,$$

when k=A, A+1, A+2, ..., or A+15 $x_{NB,k-A}$ - $x_{NBOffset,k-A}$ is the scrambling code of the CRC of the first DCI, $x_{NB,0}, x_{NB,1}, ..., x_{NB,15}$ is determined based on the index of the narrowband in which the PRB of the PUSCH carrying the uplink data is located. For example, $x_{NB,0}, x_{NB,1}, ..., x_{NB,15}$ may be 16 binary digits indicating the narrowband index, and details are not described herein again. $x_{NBOffset,0}, x_{NBOffset,1}, ..., x_{NBOffset,15}$ may be determined based on the narrowband offset information. For example, $x_{NBOffset,0}, x_{NBOffset,1}, ..., x_{NBOffset,15}$ may be 16 binary digits indicating a narrowband offset indicated by the narrowband offset information. For example, when the narrowband offset indicated by the narrowband offset information is 3, a value of $x_{NBOffset,0}, x_{NBOffset,1}, ..., x_{NBOffset,15}$ is 0000 0000 0000 0011.

Further, the UE may receive the first DCI sent by the base station, and determine the first bit group and the first bit. A manner of determining, by the UE, the first bit group and the first bit may be the same as the foregoing manner of determining, by the base station, the first bit group and the first bit, and details are not described herein again. Optionally, when receiving the first DCI sent by the base station, the UE may descramble, by using a scrambling code determined in a preset manner, the CRC of the DCI sent by the base station, to obtain the first DCI. The manner of determining, by the UE, the scrambling code for descrambling may be the same as the foregoing manner of determining, by the base station, the scrambling code for scrambling, and details are not described herein again.

Further, after determining the first bit, the UE may determine, based on feedback information indicated by the first bit, whether the uplink data is correctly received, or whether new uplink data is sent. The first bit may indicate an ACK or NACK by using 0 or 1 or by using an NDI. For details, refer to the foregoing related descriptions, and details are not described herein again.

In this embodiment of the present invention, the UE may send the uplink data to the base station. The base station may determine the first bit group in the first DCI and the first bit in the first bit group after receiving the uplink data, and the first bit is used to indicate whether the uplink data is correctly received, or whether the new uplink data is sent. After receiving the first DCI, the UE may determine, as indicated by the first bit, whether to retransmit the data, so that feedback information of a plurality of pieces of uplink data can be carried by using one piece of DCI. Therefore, feedback resource overheads are reduced, and feedback efficiency is increased, helping resolve a problem of high overheads of feedback resources for feeding back whether the uplink data is correctly received and low feedback efficiency. In addition, when a quantity N of PRBs of the PUSCH is greater than 1, feedback reliability can be improved by setting N bits used for feedback to a same value.

FIG. 6 is a schematic interactive diagram of another feedback method for uplink data according to an embodiment of the present invention. Specifically, as shown in FIG. 6, the uplink data feedback method according to this embodiment of the present invention may include the following steps.

301. A base station sends RRC signaling, and the RRC signaling includes indication information of a quantity X of bit groups of first DCI.

Specifically, a difference between this embodiment of the present invention and the foregoing embodiment shown in FIG. 4 is that the base station may notify UE of the indication information of X by using the RRC signaling. Optionally, the RRC signaling may be dedicated signaling.

302. The base station sends second DCI, and the second DCI includes at least one of information about a PRB carrying uplink data of the UE, information about a first bit group, or narrowband offset information.

303: The UE sends the uplink data to the base station by using the PRB indicated by the second DCI.

Specifically, the second DCI may be used to schedule the uplink data. For example, the second DCI may include resource allocation, such as PRB information and a modulation and coding scheme, of a PUSCH carrying the uplink data. The PRB information may be used to indicate a specific position of the PRB carrying the uplink data. In this way, the UE may determine, based on the second DCI, the PRB of the PUSCH carrying the uplink data, and transmit the uplink data by using the PRB.

304: The base station determines the first bit group in first DCI and a first bit in the first bit group.

Bits of the first DCI constitute at least one bit group, and one or more bits included in each bit group in the first DCI may be associated with one or more physical resource blocks in a narrowband. An association relationship between the bit included in the bit group and the PRB in the narrowband may be obtained through pre-configuration, and details are not described herein again. The first bit may be used to indicate whether the uplink data is correctly received, or to indicate whether the UE sends new uplink data. Optionally, when a value of X indicated by the indication information of X included in the RRC signaling is greater than 1, it may indicate that the quantity of the bit groups included in the first DCI is greater than 1, and the quantity of the bit groups is the same as the value of X. Specifically, when determining the first bit group, the base station may determine the first bit group based on the information about the first bit group included in the second DCI, or determine the first bit group based on the narrowband offset information included in the second DCI. When determining the first bit, the base station may determine the first bit based on the position of the PRB occupied by the uplink data in a narrowband and an association relationship between the bit in the first bit group and the PRB in the narrowband. For details of the manner of determining the first bit group and the first bit, refer to the related descriptions of the manner of determining the first bit group and the first bit in the foregoing embodiment shown in FIG. 4, and details are not described herein again.

Optionally, when a value of X indicated by the indication information of X included in the RRC signaling is equal to 1, to be specific, when the quantity of the bit groups included in the first DCI is 1, the bits included in the first DCI constitute the first bit group. In this scenario, the second DCI may include the information about the first bit group and/or the narrowband offset information, to determine the first bit group based on the information about the first bit group and/or the narrowband offset information. For details, refer to the related descriptions of the manner of determining the first bit group in the foregoing embodiment shown in FIG. 4, and details are not described herein again. Alternatively, the second DCI may not include the information about the first bit group and the narrowband offset information. Further, for details of the manner of determining the first bit group, refer to the related descriptions of the manner of determining the first bit group in the foregoing embodiment shown in FIG. 4, and details are not described herein again.

305. The base station sends the first DCI.

306: The UE determines the first bit group in the first DCI and the first bit in the first bit group based on the RRC signaling and/or the second DCI.

307: The UE determines, based on the first bit, whether the uplink data is correctly received or whether new uplink data is sent.

Specifically, after determining the first bit group and the first bit, the base station may send the first DCI. Optionally, before sending the first DCI, the base station may further scramble CRC of the first DCI. For example, the base station may determine, based on an index of a narrowband in which the PRB carrying the uplink data is located and the narrowband offset information, a scrambling code used for scrambling, and send the scrambled first DCI to the UE after scrambling the CRC of the first DCI by using the scrambling code.

Optionally, when the value of X indicated by the indication information of X included in the RRC signaling is equal to 1, to be specific, when the quantity of the bit groups included in the first DCI is 1, the base station may determine the scrambling code of the CRC of the first DCI based on the index of the narrowband in which the PRB of the PUSCH carrying the uplink data is located. In this scenario, the second DCI may not include the information about the first bit group and the narrowband offset information. For details of a manner of determining the scrambling code, refer to the related descriptions of the manner of determining the scrambling code in the foregoing embodiment shown in FIG. 4, and details are not described herein again. Further, optionally, in this scenario, the second DCI may alternatively include the narrowband offset information. In this case, a value of a narrowband offset indicated by the narrowband offset information may be 0. For example, a value of $x_{NBOffset,0}$, $x_{NBOffset,1}$, ..., $x_{NBOffset,15}$ is 0000 0000 0000 0000.

Optionally, when the value of X indicated by the indication information of X included in the RRC signaling is greater than 1, to be specific, when the quantity of the bit groups included in the first DCI is greater than 1, the base station may determine the scrambling code of the CRC of the first DCI according to the index of the narrowband in which the PRB of the PUSCH carrying the uplink data is located and the narrowband offset information. In this scenario, the second DCI needs to include the narrowband offset information. Further, optionally, the second DCI may further include the information about the first bit group. For details of a manner of determining the scrambling code, refer to the related descriptions of the manner of determining the scrambling code in the foregoing embodiment shown in FIG. 4, and details are not described herein again. Further, the UE may receive the first DCI sent by the base station, and determine the first bit group and the first bit. A manner of determining, by the UE, the first bit group and the first bit may be the same as the foregoing manner of determining, by the base station, the first bit group and the first bit, and details are not described herein again. Optionally, when receiving the first DCI sent by the base station, the UE may descramble, by using a scrambling code determined in a preset manner, the CRC of the DCI sent by the base station, to obtain the first DCI. The manner of determining, by the UE, the scrambling code for descrambling may be the same as the foregoing manner of determining, by the base station, the scrambling code for scrambling, and details are not described herein again.

Further, after determining the first bit, the UE may determine, based on feedback information indicated by the first bit, whether the uplink data is correctly received, or whether new uplink data is sent. The first bit may indicate an ACK or NACK by using 0 or 1 or by using an NDI. For details, refer to the foregoing related descriptions, and details are not described herein again.

In this embodiment of the present invention, the UE may send the uplink data to the base station. The base station may determine the first bit group in the first DCI and the first bit in the first bit group after receiving the uplink data, and the first bit is used to indicate whether the uplink data is correctly received, or whether the new uplink data is sent. After receiving the first DCI, the UE may determine, as indicated by the first bit, whether to retransmit the data, so that feedback information of a plurality of pieces of uplink data can be carried by using one piece of DCI. Therefore, feedback resource overheads are reduced, and feedback efficiency is increased, helping resolve a problem of high overheads of feedback resources for feeding back whether the uplink data is correctly received and low feedback efficiency. In addition, when a quantity N of PRBs of the PUSCH is greater than 1, feedback reliability can be improved by setting N bits used for feedback to a same value.

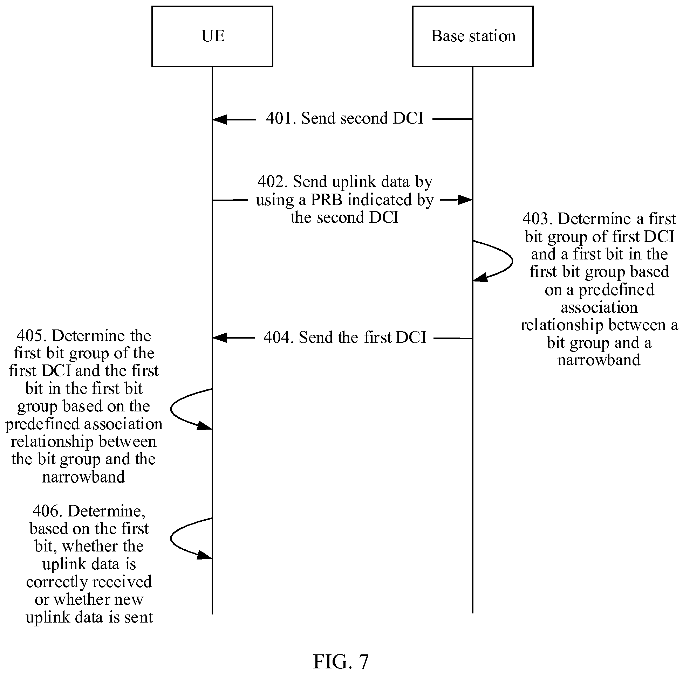

FIG. 7 is a schematic interactive diagram of still another feedback method for uplink data according to an embodiment of the present invention. Specifically, as shown in FIG. 7, the uplink data feedback method according to this embodiment of the present invention may include the following steps.

401. A base station sends second DCI, and the second DCI includes information about a PRB used to carry uplink data of UE.

402: The UE sends the uplink data to the base station by using the PRB indicated by the second DCI.

Specifically, the second DCI may be used to schedule the uplink data. For example, the second DCI may include resource allocation, such as PRB information and a modulation and coding scheme, of a PUSCH carrying the uplink data. The PRB information may be used to indicate a specific position of the PRB carrying the uplink data. In this way, the UE may determine, based on the second DCI, the PRB of the PUSCH carrying the uplink data, and transmit the uplink data by using the PRB.

403. The base station determines a first bit group in first DCI and a first bit in the first bit group based on a predefined association relationship between a bit group and a narrowband.

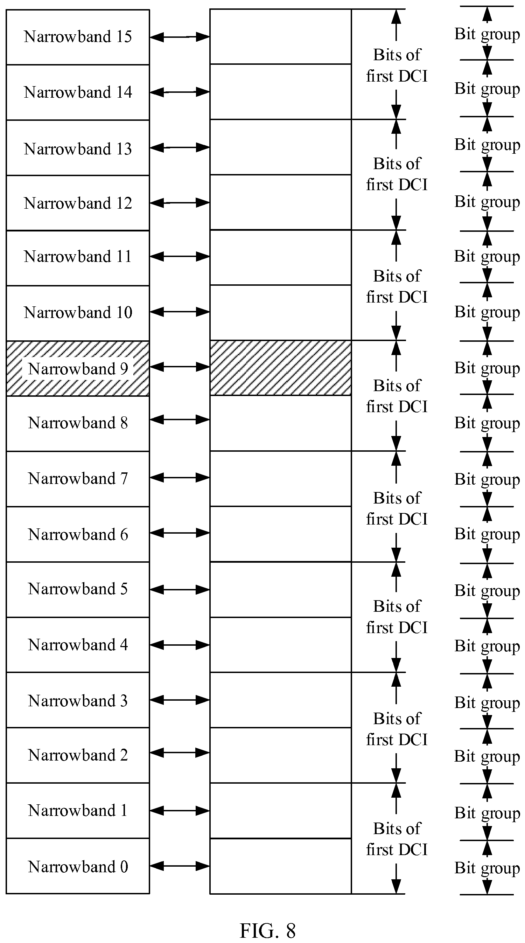

Optionally, the association relationship between the bit group and the narrowband may be obtained through pre-configuration. For example, a quantity of bit groups in the first DCI and an association relationship between each bit group and a narrowband index may be agreed on by using a protocol, so that a bit group associated with a narrowband in which the PRB of the PUSCH carrying the uplink data is located is the first bit group. For example, it is assumed that it is predefined that bits of the first DCI constitute 2 bit groups, and the 2 bit groups are associated with 2 continuous narrowbands. For example, low (high) 6 bits of the first DCI constitute a first bit group, and high (low) 6 bits constitute a second bit group. Optionally, a narrowband associated with each bit group in the first DCI may be determined in the following manner: a narrowband index associated with the first bit group in the first DCI is an even number, or a narrowband associated with the first bit group is a narrowband having an even index; a narrowband index associated with the second bit group is an odd number, or a narrowband associated with the second bit group is a narrowband having an odd index. If a narrowband in which the PRB of the PUSCH carrying the uplink data is located is a narrowband having an even index, a bit group constituted by low (high) 6 bits of the first DCI is the first bit group. If a narrowband in which the PRB of the PUSCH carrying the uplink data is located is a narrowband having an odd index, a bit group constituted by high (low) 6 bits of the first DCI is the first bit group. As shown in FIG. 8, if the narrowband in which the PRB of the PUSCH carrying the uplink data is located is a narrowband having an index of 9, a bit group shown by a shaded part may be used as the first bit group.

For another example, it is assumed that it is predefined that bits of the first DCI constitute 1 bit group, and a narrowband associated with the bit group in the first DCI may be determined in the following manner: 1 bit group in the first DCI is associated with 1 narrowband, so that it may be determined that the 1 bit group constituted by the bits of the first DCI is the first bit group. Similarly, it may alternatively be predefined that bits of the first DCI constitute 3 or 4 or more bit groups, and the bit groups are associated with a corresponding quantity of continuous narrowbands, and details are not described in detail herein.

404. The base station sends the first DCI.

405. The UE determines the first bit group of the first DCI and the first bit in the first bit group based on the predefined association relationship between the bit group and the narrowband.

406: The UE determines, based on the first bit, whether the uplink data is correctly received or whether new uplink data is sent.

Specifically, after determining the first bit group and the first bit, the base station may send the first DCI. Optionally, before sending the first DCI, the base station may further scramble CRC of the first DCI. For example, the base station may determine, based on an index of the narrowband in which the PRB carrying the uplink data is located, a scrambling code used for scrambling, and send the scrambled first DCI to the UE after scrambling the CRC of the first DCI with the scrambling code.

For example, in this embodiment of the present invention, a relationship between bits $c_k$ and $b_k$ (for descriptions of $c_k$ and $b_k$, refer to descriptions of the embodiment shown in FIG. 4) may be:

$c_k = b_k$, when k=0, 1, 2, ..., A-1

$$c_k = \left(b_k + x_{NB,k-A}\right) \bmod 2$$,

when k=A, A+1, A+2, ..., A+15 $x_{NB,0}, x_{NB,1}, ..., x_{NB,15}$ is the scrambling code determined based on the index of the narrowband in which the PRB of the PUSCH carrying the uplink data. For example, $x_{NB,0}, x_{NB,1}, ..., x_{NB,15}$ may be 16 binary digits indicating a value of fun(the narrowband index). The fun(the narrowband index) indicates a function of the narrowband index.

For example, it is predefined that the bits of the first DCI constitute 2 bit groups, and the 2 bit groups are associated with 2 continuous narrowbands. In this case, the fun may be:

$$\text{fun(the narrowband index)} = \begin{cases} \text{the narrowband index} & \text{when (the narrowband index) mod2=0} \\ \text{the narrowband index} -1 & \text{when (the narrowband index) mod2=1} \end{cases}.$$

In this scenario, assuming that the index of the narrowband in which the PRB of the PUSCH carrying the uplink data is located is 9, a value of $x_{NB,0}, x_{NB,1}, ..., x_{NB,15}$ is 0000 0000 0000 1000.

For another example, it is predefined that the bits of the first DCI constitute 1 bit group, and the bit group is associated with 1 narrowband. In this case, fun(the narrowband index)=the narrowband index.

Further, the UE may receive the first DCI sent by the base station, and determine the first bit group and the first bit based on the predefined association relationship between the bit group and the narrowband. A manner of determining, by the UE, the first bit group and the first bit may be the same as a manner of determining, by the base station, the first bit group and the first bit, and details are not described herein again. Optionally, when receiving the first DCI sent by the base station, the UE may descramble, by using a scrambling code determined in a preset manner, the CRC of the DCI sent by the base station, to obtain the first DCI. The manner of determining, by the UE, the scrambling code for descrambling may be the same as a manner of determining the scrambling code by the base station for scrambling, and details are not described herein again.

Further, after determining the first bit, the UE may determine, based on feedback information indicated by the first bit, whether the uplink data is correctly received, or whether new uplink data is sent. The first bit may indicate an ACK or NACK by using 0 or 1 or by using an NDI. For details, refer to the foregoing related descriptions, and details are not described herein again.

In this embodiment of the present invention, the UE may send the uplink data to the base station. The base station may determine the first bit group in the first DCI and the first bit in the first bit group after receiving the uplink data, and the first bit is used to indicate whether the uplink data is correctly received, or whether the new uplink data is sent. After receiving the first DCI, the UE may determine, as indicated by the first bit, whether to retransmit the data, so that feedback information of a plurality of pieces of uplink data can be carried by using one piece of DCI. Therefore, feedback resource overheads are reduced, and feedback efficiency is increased, helping resolve a problem of high overheads of feedback resources for feeding back whether the uplink data is correctly received and low feedback efficiency. In addition, when a quantity N of PRBs of the PUSCH is greater than 1, feedback reliability can be improved by setting N bits used for feedback to a same value.

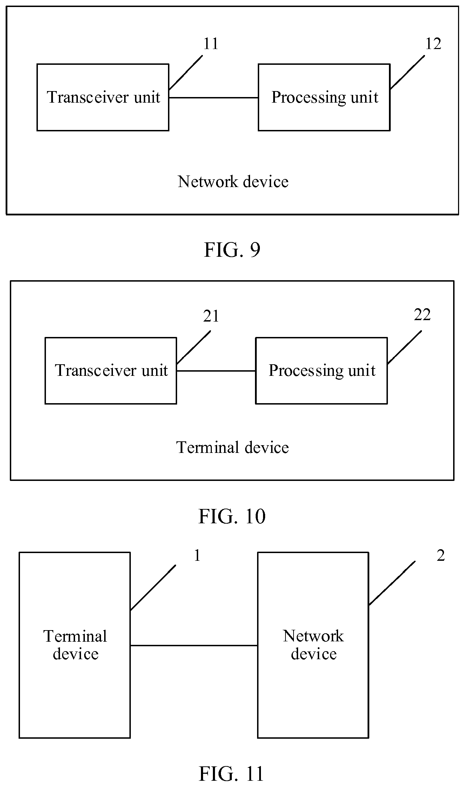

FIG. 9 is a schematic structural diagram of a network device according to an embodiment of the present invention. Specifically, as shown in FIG. 9, the network device in this embodiment of the present invention may include a transceiver unit 11 and a processing unit 12.

The transceiver unit 11 is configured to receive uplink data from a terminal device.

The processing unit 12 is configured to determine a first bit group of first downlink control information and a first bit in the first bit group, where bits of the first downlink control information include X bit groups, X is a positive integer, the X bit groups include the first bit group, one or more bits included in each of the X bit groups are associated with one or more physical resource blocks in a narrowband in a system bandwidth, and the first bit is used to indicate whether the uplink data is correctly received, or to indicate whether new uplink data is sent by the terminal device.

The transceiver unit 11 is further configured to send the first downlink control information.

Optionally, when determining the first bit in the first bit group, the processing unit 12 may be specifically configured to:

determine a physical resource block that is occupied by the uplink data and in a narrowband; and

determine, in one or more bits included in the first bit group of the first downlink control information, the first bit associated with the physical resource block. Optionally, when determining the first bit group of the first downlink control information, the processing unit 12 is specifically configured to:

determine, based on a predefined association relationship between a bit group and a narrowband, a bit group associated with a narrowband in which a physical resource block occupied by the uplink data is located, and use the associated bit group as the first bit group.

Optionally, the processing unit 12 is further configured to: determine a scrambling code of CRC of the first downlink control information based on an index of the narrowband in which the physical resource block occupied by the uplink data is located, and scramble the CRC of the first downlink control information by using the scrambling code.

Further, when sending the first downlink control information, the transceiver unit 11 may be specifically configured to:

send the scrambled first downlink control information.

Optionally, the transceiver unit 11 is further configured to send second downlink control information used to schedule the uplink data, where the second downlink control information includes at least one of indication information of the quantity X of the bit groups of the first downlink control information, information about the first bit group, or narrowband offset information.

Further, when determining the first bit group of the first downlink control information, the processing unit 12 may be specifically configured to:

determine the first bit group of the first downlink control information based on the second downlink control information.

Optionally, the transceiver unit 11 may further be configured to send RRC signaling.

The transceiver unit 11 is further configured to send second downlink control information used to schedule the uplink data.

The RRC signaling may include indication information of the quantity X of the bit groups of the first downlink control information; and the second downlink control information may include at least one of information about the first bit group and narrowband offset information.

Further, when determining the first bit group of the first downlink control information, the processing unit 12 may be specifically configured to:

determine the first bit group of the first downlink control information based on the RRC signaling and/or the second downlink control information.

Optionally, the processing unit 12 is further configured to: determine a scrambling code of CRC of the first downlink control information based on an index of the narrowband in which the physical resource block occupied by the uplink data is located and the narrowband offset information, and scramble the CRC of the first downlink control information by using the scrambling code.

Further, when sending the first downlink control information, the transceiver unit 11 may be specifically configured to:

send the scrambled first downlink control information.

Optionally, a quantity of bits included in the first bit is the same as a quantity of physical resource blocks occupied by the uplink data, and when the quantity of physical resource blocks occupied by the uplink data is greater than 1, the bits included in the first bit have a same value.

Optionally, the network device may implement, by using the foregoing units, some or all of the steps performed by the network device, such as a base station, in the uplink data feedback method in the embodiments illustrated in FIG. 3 to FIG. 8. It should be understood that this embodiment of the present invention is an apparatus embodiment corresponding to the method embodiment, and descriptions of the method embodiment are also applicable to this embodiment of the present invention.

FIG. 10 is a schematic structural diagram of a terminal device according to an embodiment of the present invention. Specifically, as shown in FIG. 10, the terminal device in this embodiment of the present invention may include a transceiver unit 21 and a processing unit 22.

The transceiver unit 21 is configured to send uplink data.

The transceiver unit 21 is further configured to receive first downlink control information from a network device.

The processing unit 22 is configured to determine a first bit group of the first downlink control information and a first bit in the first bit group, where bits of the first downlink control information include X bit groups, X is a positive integer, the X bit groups include the first bit group, and one or more bits included in each of the X bit groups are associated with one or more physical resource blocks in a narrowband in a system bandwidth.

The processing unit 22 may further be configured to determine, based on the first bit, whether the uplink data is correctly received, or whether new uplink data is sent. Optionally, when determining the first bit in the first bit group, the processing unit 22 may be specifically configured to:

determine a physical resource block that is occupied by the uplink data and in a narrowband; and
determine, in one or more bits included in the first bit group of the first downlink control information, the first bit associated with the physical resource block. Optionally, when determining the first bit group of the first downlink control information, the processing unit 22 may be specifically configured to:
determine, based on a predefined association relationship between a bit group and a narrowband, a bit group associated with a narrowband in which a physical resource block occupied by the uplink data is located, and use the associated bit group as the first bit group.

Optionally, the processing unit 22 may further be configured to determine a scrambling code of CRC of the first downlink control information based on an index of the narrowband in which the physical resource block occupied by the uplink data is located. Further, when receiving the first downlink control information from the network device, the transceiver unit 21 may be specifically configured to: descramble the CRC of the first downlink control information by using the scrambling code, to obtain the first downlink control information.

Optionally, the transceiver unit 21 may further be configured to receive second downlink control information from the network device, where the second downlink control information is used to schedule the uplink data, and the second downlink control information includes at least one of indication information of the quantity X of the bit groups of the first downlink control information, information about the first bit group, or narrowband offset information. Further, when determining the first bit group of the first downlink control information, the processing unit 22 may be specifically configured to: determine the first bit group of the first downlink control information based on the second downlink control information.

Optionally, the transceiver unit 21 may further be configured to receive RRC signaling from the network device.

The transceiver unit 21 may further be configured to receive second downlink control information from the network device, where the RRC signaling includes indication information of the quantity X of the bit groups of the first downlink control information, the second downlink control information is used to schedule the uplink data, and the second downlink control information includes at least one of information about the first bit group and narrowband offset information.

Further, when determining the first bit group of the first downlink control information, the processing unit 22 may be specifically configured to:
determine the first bit group of the first downlink control information based on the RRC signaling and/or the second downlink control information.

Optionally, the processing unit 22 may further be configured to determine a scrambling code of CRC of the first downlink control information based on an index of the narrowband in which the physical resource block occupied by the uplink data is located and the narrowband offset information.

Further, when receiving the first downlink control information from the network device, the transceiver unit 21 may be specifically configured to:
descramble the CRC of the first downlink control information by using the scrambling code, to obtain the first downlink control information.

Optionally, a quantity of bits included in the first bit is the same as a quantity of physical resource blocks occupied by the uplink data, and when the quantity of physical resource blocks occupied by the uplink data is greater than 1, the bits included in the first bit have a same value.

Optionally, the terminal device may implement, by using the foregoing units, some or all of the steps performed by the terminal device, such as UE, in the uplink data feedback method in the embodiments illustrated in FIG. 3 to FIG. 8. It should be understood that this embodiment of the present invention is an apparatus embodiment corresponding to the method embodiment, and descriptions of the method embodiment are also applicable to this embodiment of the present invention.

In this embodiment of the present invention, the terminal device may send the uplink data to the network device. The network device may determine the first bit group in the first DCI and the first bit in the first bit group after receiving the uplink data, and the first bit is used to indicate whether the uplink data is correctly received, or whether the new uplink data is sent. After receiving the first DCI, the terminal device may determine, as indicated by the first bit, whether to retransmit the data, so that feedback information of a plurality of pieces of uplink data can be carried by using one piece of DCI, helping resolve a problem of high overheads of feedback resources for feeding back whether the uplink data is correctly received and low feedback efficiency.

FIG. 11 is a schematic structural diagram of an uplink data feedback system according to an embodiment of the present invention. Specifically, as shown in FIG. 11, the system in this embodiment of the present invention may include: a terminal device 1 and a network device 2.

The terminal device 1 is configured to send uplink data.

The network device 2 is configured to: receive the uplink data; determine a first bit group of first downlink control information and a first bit in the first bit group; and send the first downlink control information. Bits of the first downlink control information constitute at least one bit group, and one or more bits included in each of the X bit groups are associated with one or more physical resource blocks in a narrowband in a system bandwidth. The first bit is used to indicate whether the uplink data is correctly received, or to indicate whether new uplink data is sent by the terminal device.

The terminal device 1 is further configured to: receive the first downlink control information; determine a first bit group of the first downlink control information and a first bit in the first bit group; and determine, based on the first bit, whether the uplink data is correctly received, or whether new uplink data is sent.

Specifically, for the terminal device 1, refer to the related descriptions of the terminal device, such as UE, in the foregoing embodiments corresponding to FIG. 3 to FIG. 8, and for the network device 2, refer to the related descriptions of the network device, such as a base station, in the foregoing embodiments corresponding to FIG. 3 to FIG. 8. Details are not described herein again.

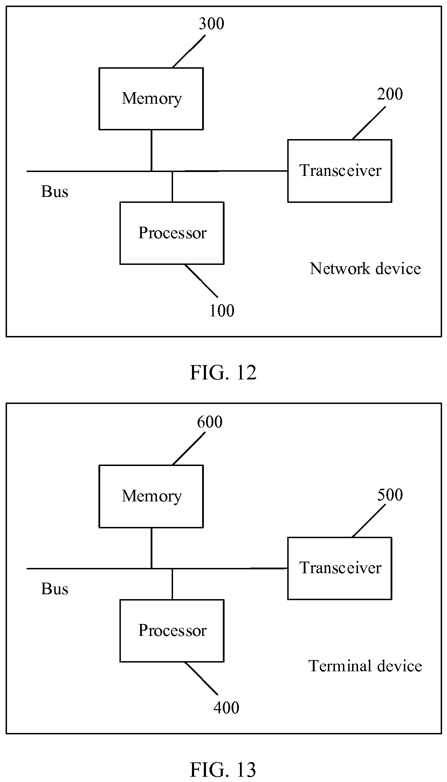

FIG. 12 is a schematic structural diagram of another network device according to an embodiment of the present invention. Specifically, as shown in FIG. 12, the network device in this embodiment of the present invention may include: a transceiver 200 and a processor 100. The processor 100 is connected to the transceiver 200. Optionally, the network device may also include a memory 300, and the memory 300 may be connected to the processor 100.

The transceiver 200, the memory 300, and the processor 100 may be in data connection by using a bus or in another manner. In this embodiment, the connection by using the bus is used for description.

The processor 100 may be a central processing unit ( central processing unit, CPU), a network processor ( network processor, NP), or a combination of a CPU and an NP.

The processor 100 may further include a hardware chip. The hardware chip may be an application-specific integrated circuit ( application-specific integrated circuit, ASIC), a programmable logic device ( programmable logic device, PLD), or a combination thereof. The PLD may be a complex programmable logic device ( complex programmable logic device, CPLD), a field-programmable gate array ( Field-Programmable Gate Array, FPGA), a generic array logic ( Generic Array Logic, GAL), or any combination thereof.

The memory 300 may include a volatile memory ( Volatile Memory) such as a random-access memory ( Random-Access Memory, RAM); the memory may further include a non-volatile memory ( non-volatile memory) such as a flash memory ( flash memory), a hard disk drive ( hard disk drive, HDD) or a solid-state drive ( solid-state drive, SSD); and the memory 300 may further include a combination of memories of the foregoing types.

The network device may be a base station, or may be a terminal device. Optionally, the memory 300 may be configured to store a program instruction, and the processor 100 may invoke the program instruction stored in the memory 300 to perform one or more steps in the embodiments shown in FIG. 3 to FIG. 8 or optional implementations of the embodiments, so that the network device implements the functions in the foregoing method. For example, the network device may implement, by using the foregoing components, some or all of the steps performed by the network device, such as a base station, in the uplink data feedback method in the embodiments illustrated in FIG. 3 to FIG. 8.

Specifically, the processor 100 may be configured to: invoke the transceiver 200 to receive uplink data from a terminal device; determine a first bit group of first downlink control information and a first bit in the first bit group; and invoke the transceiver 200 to send the first downlink control information.

Bits of the first downlink control information include X bit groups, and X is a po sitive integer. The X bit groups include the first bit group, and one or more bits included in each of the X bit groups are associated with one or more physical resource blocks in a narrowband in a system bandwidth, and the first bit is used to indicate whether the uplink data is correctly received, or to indicate whether new uplink data is sent by the terminal device.

Optionally, when determining the first bit in the first bit group, the processor 100 may be specifically configured to: determine a physical resource block that is occupied by the uplink data and in a narrowband, and determine, in one or more bits included in the first bit group of the first downlink control information, the first bit associated with the physical resource block.

Optionally, when determining the first bit group of the first downlink control information, the processor 100 may be specifically configured to: determine, based on a predefined association relationship between a bit group and a narrowband, a bit group associated with a narrowband in which a physical resource block occupied by the uplink data is located, and use the associated bit group as the first bit group.

Optionally, the processor 100 may further be configured to determine a scrambling code of CRC of the first downlink control information based on an index of the narrowband in which the physical resource block occupied by the uplink data is located; and scramble the CRC of the first downlink control information by using the scrambling code. Further, when sending the first downlink control information, the processor 100 may be specifically configured to: invoke the transceiver 200 to send the scrambled first downlink control information.

Optionally, the processor 100 is further configured to: invoke the transceiver 200 to send second downlink control information used to schedule the uplink data, where the second downlink control information includes at least one of indication information of a quantity of the bit groups of the first downlink control information, information about the first bit group, or narrowband offset information. Further, when determining the first bit group of the first downlink control information, the processor 100 may be specifically configured to: determine the first bit group of the first downlink control information based on the second downlink control information.

Optionally, the processor 100 may further be configured to: invoke the transceiver 200 to send RRC signaling; and invoke the transceiver 200 to send second downlink control information used to schedule the uplink data, where the RRC signaling includes indication information of a quantity of the bit groups of the first downlink control information, and the second downlink control information includes at least one of information about the first bit group and narrowband offset information. Further, when determining the first bit group of the first downlink control information, the processor 100 may be specifically configured to: determine the first bit group of the first downlink control information based on the RRC signaling and/or the second downlink control information.

Optionally, the processor 100 may further be configured to: determine a scrambling code of cyclic redundancy check CRC of the first downlink control information based on an index of the narrowband in which the physical resource block occupied by the uplink data is located and the narrowband offset information; and scramble the CRC of the first downlink control information by using the scrambling code. Further, when sending the first downlink control information, the processor 100 may be specifically configured to: invoke the transceiver 200 to send the scrambled first downlink control information.

Optionally, a quantity of bits included in the first bit is the same as a quantity of physical resource blocks occupied by the uplink data, and when the quantity of physical resource blocks occupied by the uplink data is greater than 1, the bits included in the first bit have a same value.

FIG. 13 is a schematic structural diagram of another terminal device according to an embodiment of the present invention. Specifically, as shown in FIG. 13, the terminal device in this embodiment of the present invention may include: a transceiver 500 and a processor 400. The processor 400 is connected to the transceiver 500. Optionally, the terminal device may further include a memory 600, and the memory 600 may be connected to the processor 400.

The transceiver 500, the memory 600, and the processor 400 may be in data connection by using a bus or in another manner. In this embodiment, the connection by using the bus is used for description.

The processor 400 may be a CPU, an NP, or a combination of a CPU and an NP.

The processor 400 may further include a hardware chip. The hardware chip may be an ASIC, a PLD, or a combination thereof. The PLD may be a CPLD, an FPGA, a GAL, or any combination thereof.

The memory 600 may include a volatile memory ( volatile memory), such as a RAM; the memory may further include a non-volatile memory ( non-volatile memory), such as a flash memory ( flash memory), an HDD, or an SSD; and the memory 600 may further include a combination of the foregoing types of memories.

Optionally, the memory 600 may be configured to store a program instruction, and the processor 400 may invoke the program instruction stored in the memory 600 to perform one or more steps in the embodiments shown in FIG. 3 to FIG. 8 or optional implementations of the embodiments, so that the terminal device implements the functions in the foregoing method. For example, the terminal device may implement, by using the foregoing components, some or all of the steps performed by the terminal device, such as UE, in the uplink data feedback method in the embodiments corresponding to FIG. 3 to FIG. 8.

Specifically, the processor 400 may be configured to: invoke the transceiver 500 to send uplink data; invoke the transceiver 500 to receive first downlink control information from a network device; determine a first bit group of the first downlink control information and a first bit in the first bit group; and determine, based on the first bit, whether the uplink data is correctly received, or whether new uplink data is sent.

Bits of the first downlink control information include X bit groups, and X is a positive integer. The X bit groups include the first bit group, and one or more bits included in each of the X bit groups are associated with one or more physical resource blocks in a narrowband in a system bandwidth.

Optionally, when determining the first bit in the first bit group, the processor 400 may be specifically configured to: determine a physical resource block that is occupied by the uplink data and in a narrowband, and determine, in one or more bits included in the first bit group of the first downlink control information, the first bit associated with the physical resource block.

Optionally, when determining the first bit group of the first downlink control information, the processor 400 may be specifically configured to: determine, based on a predefined association relationship between a bit group and a narrowband, a bit group associated with a narrowband in which a physical resource block occupied by the uplink data is located, and use the associated bit group as the first bit group.

Optionally, the processor 400 may further be configured to determine a scrambling code of CRC of the first downlink control information based on an index of the narrowband in which the physical resource block occupied by the uplink data is located; and when receiving the first downlink control information from the network device, the processor 400 may be specifically configured to descramble the CRC of the first downlink control information by using the scrambling code, to obtain the first downlink control information.

Optionally, the processor 400 may further be configured to invoke the transceiver 500 to receive second downlink control information from the network device, where the second downlink control information is used to schedule the uplink data, and the second downlink control information includes at least one of indication information of a quantity of the bit groups of the first downlink control information, information about the first bit group, or narrowband offset information. Further, when determining the first bit group of the first downlink control information, the processor 400 may be specifically configured to: determine the first bit group of the first downlink control information based on the second downlink control information.

Optionally, the processor 400 may further be configured to: invoke the transceiver 500 to receive RRC signaling from the network device; and invoke the transceiver 500 to receive second downlink control information from the network device, where the RRC signaling may include indication information of a quantity of the bit groups of the first downlink control information, the second downlink control information is used to schedule the uplink data, and the second downlink control information may include at least one of information about the first bit group and narrowband offset information. Further, when determining the first bit group of the first downlink control information, the processor 400 may be specifically configured to: determine the first bit group of the first downlink control information based on the RRC signaling and/or the second downlink control information.

Optionally, the processor 400 may further be configured to determine a scrambling code of CRC of the first downlink control information based on an index of the narrowband in which the physical resource block occupied by the uplink data is located and the narrowband offset information; and when receiving the first downlink control information from the network device, the processor 400 may be specifically configured to descramble the CRC of the first downlink control information by using the scrambling code, to obtain the first downlink control information.

Optionally, a quantity of bits included in the first bit is the same as a quantity of physical resource blocks occupied by the uplink data, and when the quantity of physical resource blocks occupied by the uplink data is greater than 1, the bits included in the first bit have a same value.

In this embodiment of the present invention, the terminal device may send the uplink data to the network device. The network device may determine the first bit group in the first DCI and the first bit in the first bit group after receiving the uplink data, and the first bit is used to indicate whether the uplink data is correctly received, or whether the new uplink data is sent. After receiving the first DCI, the terminal device may determine, as indicated by the first bit, whether to retransmit the data, so that feedback information of a plurality of pieces of uplink data can be carried by using one piece of DCI, helping resolve a problem of high overheads of feedback resources for feeding back whether the uplink data is correctly received and low feedback efficiency.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive solid state drive (SSD)), or the like.

## Claims

1. A feedback method for uplink data, comprising:

    receiving (101) uplink data from a terminal device;
    determining (102) a first bit group of first downlink control information and a first bit in the first bit group, wherein bits of the first downlink control information comprise X bit groups, X is a positive integer, the X bit groups comprise the first bit group, one or more bits comprised in each of the X bit groups are associated with one or more physical resource blocks in a narrowband in a system bandwidth, and the first bit is used to indicate whether the uplink data is correctly received, or to indicate whether new uplink data is sent by the terminal device; and

sending (103) the first downlink control information;

wherein the determining a first bit in the first bit group comprises:

determining a physical resource block that is occupied by the uplink data and in a narrowband; and
determining, in one or more bits comprised in the first bit group of the first downlink control information, the first bit associated with the physical resource block;

wherein the determining a first bit group of first downlink control information comprises:

determining, based on a predefined association relationship between a bit group and a narrowband, a bit group associated with a narrowband in which a physical resource block occupied by the uplink data is located, and using the associated bit group as the first bit group;

the method further comprising:

determining a scrambling code of cyclic redundancy check, CRC, of the first downlink control information based on an index of the narrowband in which the physical resource block occupied by the uplink data is located; and
scrambling the CRC of the first downlink control information by using the scrambling code, wherein the sending the first downlink control information comprises:
sending the scrambled first downlink control information.

2. The method according to claim 1 further comprising:

sending second downlink control information used to schedule the uplink data, wherein the second downlink control information comprises at least one of indication information of the quantity X of the bit groups of the first downlink control information, information about the first bit group, or narrowband offset information, wherein the determining a first bit group of first downlink control information comprises:
determining the first bit group of the first downlink control information based on the second downlink control information.

3. A feedback method for uplink data, comprising:

sending (101) uplink data;
receiving (102) first downlink control information from a network device;
determining (104) a first bit group of the first downlink control information and a first bit in the first bit group, wherein bits of the first downlink control information comprise X bit groups, X is a positive integer, the X bit groups comprise the first bit group, and one or more bits comprised in each of the X bit groups are associated with one or more physical resource blocks in a narrowband in a system bandwidth; and
determining, based on the first bit, whether the uplink data is correctly received, or whether new uplink data is sent;
wherein the determining a first bit in the first bit group comprises:

determining a physical resource block that is occupied by the uplink data and in a narrowband; and
determining, in one or more bits comprised in the first bit group of the first downlink control information, the first bit associated with the physical resource block;
wherein the determining a first bit group of the first downlink control information comprises:

determining, based on a predefined association relationship between a bit group and a narrowband, a bit group associated with a narrowband in which a physical resource block occupied by the uplink data is located, and using the associated bit group as the first bit group;
wherein the receiving first downlink control information from a network device comprises:

determining, based on an index of the narrowband in which the physical resource block occupied by the uplink data is located, a scrambling code of cyclic redundancy check CRC of the first downlink control information; and
descrambling the CRC of the first downlink control information by using the scrambling code, to obtain the first downlink control information.

4. The method according to claim 3, further comprising:

receiving second downlink control information from the network device, wherein the second downlink control information is used to schedule the uplink data, and the second downlink control information comprises at least one of indication information of the quantity X of the bit groups of the first downlink control information, information about the first bit group, or narrowband offset information, wherein
the determining a first bit group of the first downlink control information comprises:
determining the first bit group of the first downlink control information based on the second downlink control information.

5. A network device, comprising:

a transceiver unit (11), configured to receive uplink data from a terminal device; and
a processing unit (12), configured to determine a first bit group of first downlink control information and a first bit in the first bit group, wherein bits of the first downlink control information comprise X bit groups, X is a positive integer, the X bit groups comprise the first bit group, one or more bits comprised in each of the X bit groups are associated with one or more physical resource blocks in a narrowband in a system bandwidth, and the first bit is used to indicate whether the uplink data is correctly received, or to indicate whether new uplink data is sent by the terminal device, wherein
the transceiver unit is further configured to send the first downlink control information;
wherein when determining the first bit in the first bit group, the processing unit is specifically configured to:

determine a physical resource block that is occupied by the uplink data and in a narrowband; and
determine, in one or more bits comprised in the first bit group of the first downlink control information, the first bit associated with the physical resource block;
wherein when determining the first bit group of the first downlink control information, the processing unit is specifically configured to:

determine, based on a predefined association relationship between a bit group and a narrowband, a bit group associated with a narrowband in which a physical resource block occupied by the uplink data is located, and use the associated bit group as the first bit group;
wherein
the processing unit is further configured to: determine a scrambling code of cyclic redundancy check, CRC, of the first downlink control information based on an index of the narrowband in which the physical resource block occupied by the uplink data is located, and scramble the CRC of the first downlink control information by using the scrambling code; and
when sending the first downlink control information, the transceiver unit is specifically configured to:
send the scrambled first downlink control information.

6. The network device according to claim 5, wherein
the transceiver unit is further configured to send second downlink control information used to schedule the uplink data, wherein the second downlink control information comprises at least one of indication information of the quantity X of the bit groups of the first downlink control information, information about the first bit group, or narrowband offset information; and
when determining the first bit group of the first downlink control information, the processing unit is specifically configured to:
determine the first bit group of the first downlink control information based on the second downlink control information.

7. A terminal device, comprising:

a transceiver unit (21), configured to send uplink data, wherein
the transceiver unit is further configured to receive first downlink control information from a network device; and
a processing unit (22), configured to determine a first bit group of the first downlink control information and a first bit in the first bit group, wherein bits of the first downlink control information comprise X bit groups, X is a positive integer, the X bit groups comprise the first bit group, and one or more bits comprised in each of the X bit groups are associated with one or more physical resource blocks in a narrowband in a system bandwidth, wherein

the processing unit is further configured to determine, based on the first bit, whether the uplink data is correctly received, or whether new uplink data is sent;

wherein when determining the first bit in the first bit group, the processing unit is specifically configured to:

determine a physical resource block that is occupied by the uplink data and in a narrowband; and

determine, in one or more bits comprised in the first bit group of the first downlink control information, the first bit associated with the physical resource block;

wherein when determining the first bit group of the first downlink control information, the processing unit is specifically configured to:

determine, based on a predefined association relationship between a bit group and a narrowband, a bit group associated with a narrowband in which a physical resource block occupied by the uplink data is located, and use the associated bit group as the first bit group;

wherein

the processing unit is further configured to determine a scrambling code of cyclic redundancy check, CRC, of the first downlink control information based on an index of the narrowband in which the physical resource block occupied by the uplink data is located; and

when receiving the first downlink control information from the network device, the transceiver unit is specifically configured to:

descramble the CRC of the first downlink control information by using the scrambling code, to obtain the first downlink control information.

8. The terminal device according to claim 7, wherein

the transceiver unit is further configured to receive second downlink control information from the network device, wherein the second downlink control information is used to schedule the uplink data, and the second downlink control information comprises at least one of indication information of the quantity X of the bit groups of the first downlink control information, information about the first bit group, or narrowband offset information; and

when determining the first bit group of the first downlink control information, the processing unit is specifically configured to:

determine the first bit group of the first downlink control information based on the second downlink control information.


**Patentansprüche**

1. Rückkopplungsverfahren für Uplink-Daten, umfassend:

Empfangen (101) von Uplink-Daten von einem Endgerät;

Bestimmen (102) einer ersten Bitgruppe von ersten Downlink-Steuerinformationen und eines ersten Bits in der ersten Bitgruppe, wobei Bits der ersten Downlink-Steuerinformationen X Bitgruppen umfassen, X eine positive ganze Zahl ist, die X Bitgruppen die erste Bitgruppe umfassen, ein oder mehrere Bits, die in jeder der X Bitgruppen enthalten sind, einem oder mehreren physischen Ressourcenblöcken in einem Schmalband in einer Systembandbreite zugeordnet sind und das erste Bit verwendet wird, um anzuzeigen, ob die Uplink-Daten korrekt empfangen werden oder um anzuzeigen, ob neue Uplink-Daten von dem Endgerät gesendet werden; und

Senden (103) der ersten Downlink-Steuerinformationen;

wobei das Bestimmen eines ersten Bits in der ersten Bitgruppe umfasst:

Bestimmen eines physischen Ressourcenblocks, der von den Uplink-Daten und in einem Schmalband belegt wird; und

Bestimmen in einem oder mehreren Bits, die in der ersten Bitgruppe der ersten Downlink-Steuerinformationen enthalten sind, des ersten Bits, das dem physischen Ressourcenblock zugeordnet ist;

wobei das Bestimmen einer ersten Bitgruppe von ersten Downlink-Steuerinformationen umfasst:

Bestimmen basierend auf einer vordefinierten Zuordnungsbeziehung zwischen einer Bitgruppe und einem Schmalband einer Bitgruppe, die einem Schmalband zugeordnet ist, in dem sich ein physischer Ressourcenblock befindet, der von den Uplink-Daten belegt wird, und Verwenden der zugeordneten Bitgruppe als erste Bitgruppe;

wobei das Verfahren ferner umfasst:

Bestimmen eines Verschlüsselungscodes für zyklische Redundanzprüfung (cyclic redundancy check - CRC) der ersten Downlink-Steuerinformationen basierend auf einem Index des Schmalbandes, in dem sich der von den Uplink-Daten belegte physikalische Ressourcenblock befindet; und
Verschlüsseln der CRC der ersten Downlink-Steuerinformationen unter Verwendung des Verschlüsselungscodes, wobei
das Senden der ersten Downlink-Steuerinformationen umfasst:
Senden der verschlüsselten ersten Downlink-Steuerinformationen.

2.  Verfahren nach Anspruch 1, ferner umfassend:

Senden von zweiten Downlink-Steuerinformationen, die zum Planen der Uplink-Daten verwendet werden, wobei die zweiten Downlink-Steuerinformationen mindestens eines von Anzeigeinformationen der Menge X der Bitgruppen der ersten Downlink-Steuerinformationen, Informationen über die erste Bitgruppe oder Schmalbandversatzinformationen umfassen, wobei
das Bestimmen einer ersten Bitgruppe von ersten Downlink-Steuerinformationen umfasst:
Bestimmen der ersten Bitgruppe der ersten Downlink-Steuerinformationen basierend auf den zweiten Downlink-Steuerinformationen.

3.  Rückkopplungsverfahren für Uplink-Daten, umfassend:

Senden (101) von Uplink-Daten;
Empfangen (102) von ersten Downlink-Steuerinformationen von einer Netzwerkvorrichtung;
Bestimmen (104) einer ersten Bitgruppe der ersten Downlink-Steuerinformationen und eines ersten Bits in der ersten Bitgruppe, wobei Bits der ersten Downlink-Steuerinformationen X Bitgruppen umfassen, X eine positive ganze Zahl ist, die X Bitgruppen die erste Bitgruppe umfassen und ein oder mehrere Bits, die in jeder der X Bitgruppen enthalten sind, einem oder mehreren physischen Ressourcenblöcken in einem Schmalband in einer Systembandbreite zugeordnet sind; und
Bestimmen basierend auf dem ersten Bit, ob die Uplink-Daten korrekt empfangen werden oder ob neue Uplink-Daten gesendet werden;
wobei das Bestimmen eines ersten Bits in der ersten Bitgruppe umfasst:

Bestimmen eines physischen Ressourcenblocks, der von den Uplink-Daten und in einem Schmalband belegt wird; und
Bestimmen in einem oder mehreren Bits, die in der ersten Bitgruppe der ersten Downlink-Steuerinformationen enthalten sind, des ersten Bits, das dem physischen Ressourcenblock zugeordnet ist;
wobei das Bestimmen einer ersten Bitgruppe der ersten Downlink-Steuerinformationen umfasst:

Bestimmen basierend auf einer vordefinierten Zuordnungsbeziehung zwischen einer Bitgruppe und einem Schmalband einer Bitgruppe, die einem Schmalband zugeordnet ist, in dem sich ein physischer Ressourcenblock befindet, der von den Uplink-Daten belegt wird, und Verwenden der zugeordneten Bitgruppe als erste Bitgruppe;
wobei das Empfangen der ersten Downlink-Steuerinformation von einer Netzwerkvorrichtung umfasst:

Bestimmen basierend auf einem Index des Schmalbandes, in dem sich der von den Uplink-Daten belegte physikalische Ressourcenblock befindet, eines Verschlüsselungscodes für zyklische Redundanzprüfung (CRC) der ersten Downlink-Steuerinformationen; und
Entschlüsseln der CRC der ersten Downlink-Steuerinformationen unter Verwendung des Verschlüsselungscodes, um die ersten Downlink-Steuerinformationen zu erhalten.

4.  Verfahren nach Anspruch 3, ferner umfassend:

Empfangen von zweiten Downlink-Steuerinformationen von der Netzwerkvorrichtung, wobei die zweiten Downlink-Steuerinformationen zum Planen der Uplink-Daten verwendet werden und die zweiten Downlink-Steuerinformationen mindestens eines von Anzeigeinformationen der Menge X der Bitgruppen der ersten Downlink-Steuerinformationen, Informationen über die erste Bitgruppe oder Schmalbandversatzinformationen umfassen, wobei
das Bestimmen einer ersten Bitgruppe der ersten Downlink-Steuerinformationen umfasst:

Bestimmen der ersten Bitgruppe der ersten Downlink-Steuerinformationen basierend auf den zweiten Downlink-Steuerinformationen.

5. Netzwerkvorrichtung, umfassend:

eine Sende-/Empfangseinheit (11), die dazu konfiguriert ist, Uplink-Daten von einem Endgerät zu empfangen; und

eine Verarbeitungseinheit (12), die dazu konfiguriert ist, eine ersten Bitgruppe von ersten Downlink-Steuerinformationen und ein erstes Bit in der ersten Bitgruppe zu bestimmen, wobei Bits der ersten Downlink-Steuerinformationen X Bitgruppen umfassen, X eine positive ganze Zahl ist, die X Bitgruppen die erste Bitgruppe umfassen, ein oder mehrere Bits, die in jeder der X Bitgruppen enthalten sind, einem oder mehreren physischen Ressourcenblöcken in einem Schmalband in einer Systembandbreite zugeordnet sind, und das erste Bit verwendet wird, um anzuzeigen, ob die Uplink-Daten korrekt empfangen werden oder um anzuzeigen, ob neue Uplink-Daten von dem Endgerät gesendet werden, wobei

die Sende-/Empfangseinheit ferner dazu konfiguriert ist, die ersten Downlink-Steuerinformationen zu senden; wobei die Verarbeitungseinheit beim Bestimmen des ersten Bits in der ersten Bitgruppe konkret zu Folgendem konfiguriert ist:

Bestimmen eines physischen Ressourcenblocks, der von den Uplink-Daten und in einem Schmalband belegt wird; und

Bestimmen in einem oder mehreren Bits, die in der ersten Bitgruppe der ersten Downlink-Steuerinformationen enthalten sind, des ersten Bits, das dem physischen Ressourcenblock zugeordnet ist;

wobei die Verarbeitungseinheit beim Bestimmen der ersten Bitgruppe der Downlink-Steuerinformationen konkret zu Folgendem konfiguriert ist:

Bestimmen basierend auf einer vordefinierten Zuordnungsbeziehung zwischen einer Bitgruppe und einem Schmalband einer Bitgruppe, die einem Schmalband zugeordnet ist, in dem sich ein physischer Ressourcenblock befindet, der von den Uplink-Daten belegt ist, und Verwenden der zugeordneten Bitgruppe als erste Bitgruppe;

wobei

die Verarbeitungseinheit ferner zu Folgendem konfiguriert ist: Bestimmen eines Verschlüsselungscodes für zyklischen Redundanzprüfung (CRC) der ersten Downlink-Steuerinformationen basierend auf einem Index des Schmalbandes, in dem sich der von den Uplink-Daten belegte physikalische Ressourcenblock befindet, und Verschlüsseln der CRC der ersten Downlink-Steuerinformationen unter Verwendung des Verschlüsselungscodes; und

die Sende-/Empfangseinheit beim Senden der ersten Downlink-Steuerinformationen konkret zu Folgendem konfiguriert ist:

Senden der verschlüsselten ersten Downlink-Steuerinformationen.

6. Netzwerkvorrichtung nach Anspruch 5, wobei

die Sende-/Empfangseinheit ferner dazu konfiguriert ist, zweite Downlink-Steuerinformationen, die zum Planen der Uplink-Daten verwendet werden, zu senden, wobei die zweiten Downlink-Steuerinformationen mindestens eines von Anzeigeinformationen der Menge X der Bitgruppen der ersten Downlink-Steuerinformationen, Informationen über die erste Bitgruppe oder Schmalbandversatzinformationen umfassen; und

die Verarbeitungseinheit beim Bestimmen der ersten Bitgruppe der ersten Downlink-Steuerinformationen konkret zu Folgendem konfiguriert ist:

Bestimmen der ersten Bitgruppe der ersten Downlink-Steuerinformationen basierend auf den zweiten Downlink-Steuerinformationen.

7. Endgerät, umfassend:

eine Sende-/Empfangseinheit (21), die dazu konfiguriert ist, Uplink-Daten zu senden, wobei die Sende-/Empfangseinheit ferner dazu konfiguriert ist, erste Downlink-Steuerinformationen von einer Netzwerkvorrichtung zu empfangen; und

eine Verarbeitungseinheit (22), die dazu konfiguriert ist, eine erste Bitgruppe der ersten Downlink-Steuerinformationen und ein erstes Bit in der ersten Bitgruppe zu bestimmen, wobei Bits der ersten Downlink-Steuerinformationen X Bitgruppen umfassen, X eine positive ganze Zahl ist, die X Bitgruppen die erste Bitgruppe umfassen und ein oder mehrere Bits, die in jeder der X Bitgruppen enthalten sind, einem oder mehreren physischen Ressourcenblöcken in einem Schmalband in einer Systembandbreite zugeordnet sind, wobei die Verarbeitungseinheit ferner dazu konfiguriert ist, basierend auf dem ersten Bit zu bestimmen, ob die Uplink-Daten korrekt empfangen werden oder ob neue Uplink-Daten gesendet werden; wobei die Verarbeitungseinheit beim Bestimmen des ersten Bits in der ersten Bitgruppe konkret zu Folgendem konfiguriert ist:

Bestimmen eines physischen Ressourcenblocks, der von den Uplink-Daten und in einem Schmalband belegt wird; und

Bestimmen in einem oder mehreren Bits, die in der ersten Bitgruppe der ersten Downlink-Steuerinformationen enthalten sind, des ersten Bits, das dem physischen Ressourcenblock zugeordnet ist; wobei die Verarbeitungseinheit beim Bestimmen der ersten Bitgruppe der Downlink-Steuerinformationen konkret zu Folgendem konfiguriert ist:

Bestimmen basierend auf einer vordefinierten Zuordnungsbeziehung zwischen einer Bitgruppe und einem Schmalband einer Bitgruppe, die einem Schmalband zugeordnet ist, in dem sich ein physischer Ressourcenblock befindet, der von den Uplink-Daten belegt ist, und Verwenden der zugeordneten Bitgruppe als erste Bitgruppe; wobei

die Verarbeitungseinheit ferner dazu konfiguriert ist, einen Verschlüsselungscode für zyklische Redundanzprüfung (CRC) der ersten Downlink-Steuerinformationen basierend auf einem Index des Schmalbandes, in dem sich der von den Uplink-Daten belegte physikalische Ressourcenblock befindet, zu bestimmen; und

die Sende-/Empfangseinheit beim Empfangen der ersten Downlink-Steuerinformationen von der Netzwerkvorrichtung konkret zu Folgendem konfiguriert ist:

Entschlüsseln der CRC der ersten Downlink-Steuerinformationen unter Verwendung des Verschlüsselungscodes, um die ersten Downlink-Steuerinformationen zu erhalten.

8. Endgerät nach Anspruch 7, wobei
die Sende-/Empfangseinheit ferner dazu konfiguriert ist, zweite Downlink-Steuerinformationen von der Netzwerkvorrichtung zu empfangen, wobei die zweiten Downlink-Steuerinformationen zum Planen der Uplink-Daten verwendet werden und die zweiten Downlink-Steuerinformationen mindestens eines von Anzeigeinformationen der Menge X der Bitgruppen der ersten Downlink-Steuerinformationen, Informationen über die erste Bitgruppe oder Schmalbandversatzinformationen umfassen; und
die Verarbeitungseinheit beim Bestimmen der ersten Bitgruppe der ersten Downlink-Steuerinformationen konkret zu Folgendem konfiguriert ist:
Bestimmen der ersten Bitgruppe der ersten Downlink-Steuerinformationen basierend auf den zweiten Downlink-Steuerinformationen.

## Revendications

1. Procédé de renvoi pour des données de liaison montante, comprenant :

la réception (101) de données de liaison montante provenant d'un dispositif terminal ;
la détermination (102) d'un premier groupe de bits de premières informations de commande de liaison descendante et d'un premier bit dans le premier groupe de bits, dans lequel les bits des premières informations de commande de liaison descendante comprennent X groupes de bits, X est un entier positif, les X groupes de bits comprennent le premier groupe de bits, un ou plusieurs bits compris dans chacun des X groupes de bits sont associés à un ou plusieurs blocs de ressources physiques dans une bande étroite dans une largeur de bande du système, et le premier bit est utilisé pour indiquer si les données de liaison montante sont correctement reçues, ou pour indiquer si de nouvelles données de liaison montante sont envoyées par le dispositif terminal ; et
l'envoi (103) des premières informations de commande de liaison descendante ;
dans lequel la détermination d'un premier bit dans le premier groupe de bits comprend :

la détermination d'un bloc de ressources physiques qui est occupé par les données de liaison montante et dans une bande étroite ; et
la détermination, dans un ou plusieurs bits compris dans le premier groupe de bits des premières informations de commande de liaison descendante, du premier bit associé au bloc de ressources physiques ;

dans lequel la détermination d'un premier groupe de bits de premières informations de commande de liaison descendante comprend :

la détermination, sur la base d'une relation d'association prédéfinie entre un groupe de bits et une bande étroite, d'un groupe de bits associé à une bande étroite dans laquelle se trouve un bloc de ressources physiques occupé par les données de liaison montante, et l'utilisation du groupe de bits associé en tant que premier groupe de bits ;
le procédé comprend en outre :

la détermination d'un code de brouillage de contrôle par redondance cyclique, CRC, des premières informations de commande de liaison descendante sur la base d'un index de la bande étroite dans laquelle se trouve le bloc de ressources physiques occupé par les données de liaison montante ; et le brouillage du CRC des premières informations de commande de liaison descendante à l'aide du code de brouillage, dans lequel
l'envoi des premières informations de commande de liaison descendante comprend ;
l'envoi des premières informations de commande de liaison descendante brouillées.

2. Procédé selon la revendication 1, comprenant en outre :

l'envoi de secondes informations de commande de liaison descendante utilisées pour planifier les données de liaison montante, dans lequel les secondes informations de commande de liaison descendante comprennent au moins un élément parmi des informations d'indication de la quantité X des groupes de bits des premières informations de commande de liaison descendante, des informations concernant le premier groupe de bits ou des informations de décalage de bande étroite, dans lequel
la détermination d'un premier groupe de bits de premières informations de commande de liaison descendante comprend :
la détermination du premier groupe de bits des premières informations de commande de liaison descendante sur la base des secondes informations de commande de liaison descendante.

3. Procédé de renvoi pour des données de liaison montante, comprenant :

l'envoi (101) de données de liaison montante ;
la réception (102) de premières informations de commande de liaison descendante provenant d'un dispositif réseau ;
la détermination (104) d'un premier groupe de bits des premières informations de commande de liaison descendante et d'un premier bit dans le premier groupe de bits, dans lequel les bits des premières informations de commande de liaison descendante comprennent X groupes de bits, X est un entier positif, les X groupes de bits comprennent le premier groupe de bits, et un ou plusieurs bits compris dans chacun des X groupes de bits sont associés à un ou plusieurs blocs de ressources physiques dans une bande étroite dans une largeur de bande du système ; et
le fait de déterminer, sur la base du premier bit, si les données de liaison montante sont correctement reçues, ou si de nouvelles données de liaison montante sont envoyées ;
dans lequel la détermination d'un premier bit dans le premier groupe de bits comprend :

la détermination d'un bloc de ressources physiques qui est occupé par les données de liaison montante et dans une bande étroite ; et
la détermination, dans un ou plusieurs bits compris dans le premier groupe de bits des premières informations de commande de liaison descendante, du premier bit associé au bloc de ressources physiques ;
dans lequel la détermination d'un premier groupe de bits des premières informations de commande de liaison descendante comprend :

la détermination, sur la base d'une relation d'association prédéfinie entre un groupe de bits et une bande étroite, d'un groupe de bits associé à une bande étroite dans laquelle se trouve un bloc de ressources physiques occupé par les données de liaison montante, et l'utilisation du groupe de bits associé en tant que premier groupe de bits ;
dans lequel la réception des premières informations de commande de liaison descendante provenant d'un dispositif réseau comprend :

la détermination, sur la base d'un index de la bande étroite dans laquelle se trouve le bloc de ressources physiques occupé par les données de liaison montante, d'un code de brouillage de contrôle par redondance cyclique, CRC des premières informations de commande de liaison descendante ; et

le désembrouillage du CRC des premières informations de commande de liaison descendante à l'aide du code de brouillage, pour obtenir les premières informations de commande de liaison descendante.

4. Procédé selon la revendication 3, comprenant en outre :

la réception de secondes informations de commande de liaison descendante provenant du dispositif réseau, dans lequel les secondes informations de commande de liaison descendante sont utilisées pour planifier les données de liaison montante, et les secondes informations de commande de liaison descendante comprennent au moins un élément parmi des informations d'indication de la quantité X des groupes de bits des premières informations de commande de liaison descendante, des informations concernant le premier groupe de bits ou des informations de décalage de bande étroite, dans lequel

la détermination d'un premier groupe de bits des premières informations de commande de liaison descendante comprend :

la détermination du premier groupe de bits des premières informations de commande de liaison descendante sur la base des secondes informations de commande de liaison descendante.

5. Dispositif réseau, comprenant :

une unité d'émetteur-récepteur (11), configurée pour recevoir des données de liaison montante provenant d'un dispositif terminal ; et

une unité de traitement (12), configurée pour déterminer un premier groupe de bits de premières informations de commande de liaison descendante et un premier bit dans le premier groupe de bits, dans lequel les bits des premières informations de commande de liaison descendante comprennent X groupes de bits, X est un entier positif, les X groupes de bits comprennent le premier groupe de bits, un ou plusieurs bits compris dans chacun des X groupes de bits sont associés à un ou plusieurs blocs de ressources physiques dans une bande étroite dans une largeur de bande du système, et le premier bit est utilisé pour indiquer si les données de liaison montante sont correctement reçues, ou pour indiquer si de nouvelles données de liaison montante sont envoyées par le dispositif terminal, dans lequel

l'unité d'émetteur-récepteur est en outre configurée pour envoyer les premières informations de commande de liaison descendante ;

dans lequel, lors de la détermination du premier bit dans le premier groupe de bits, l'unité de traitement est spécifiquement configurée pour :

déterminer un bloc de ressources physiques qui est occupé par les données de liaison montante et dans une bande étroite ; et

déterminer, dans un ou plusieurs bits compris dans le premier groupe de bits des premières informations de commande de liaison descendante, le premier bit associé au bloc de ressources physiques ;

dans lequel, lors de la détermination du premier groupe de bits des premières informations de commande de liaison descendante, l'unité de traitement est spécifiquement configurée pour :

déterminer, sur la base d'une relation d'association prédéfinie entre un groupe de bits et une bande étroite, un groupe de bits associé à une bande étroite dans laquelle se trouve un bloc de ressources physiques occupé par les données de liaison montante, et utiliser le groupe de bits associé en tant que premier groupe de bits ;

dans lequel

l'unité de traitement est en outre configurée pour : déterminer un code de brouillage de contrôle par redondance cyclique, CRC, des premières informations de commande de liaison descendante sur la base d'un index de la bande étroite dans laquelle se trouve le bloc de ressources physiques occupé par les données de liaison montante, et brouiller le CRC des premières informations de commande de liaison descendante à l'aide du code de brouillage ; et

lors de l'envoi des premières informations de commande de liaison descendante, l'unité d'émetteur-récepteur est spécifiquement configurée pour :

envoyer les premières informations de commande de liaison descendante brouillées.

**6.** Dispositif réseau selon la revendication 5, dans lequel
l'unité d'émetteur-récepteur est en outre configurée pour envoyer des secondes informations de commande de liaison descendante utilisées pour planifier les données de liaison montante, dans lequel les secondes informations de commande de liaison descendante comprennent au moins un élément parmi des informations d'indication de la quantité X des groupes de bits des premières informations de commande de liaison descendante, des informations concernant le premier groupe de bits ou des informations de décalage de bande étroite ; et
lors de la détermination du premier groupe de bits des premières informations de commande de liaison descendante, l'unité de traitement est spécifiquement configurée pour :
déterminer le premier groupe de bits des premières informations de commande de liaison descendante sur la base des secondes informations de commande de liaison descendante.

**7.** Dispositif terminal, comprenant :

une unité d'émetteur-récepteur (21), configurée pour envoyer des données de liaison montante, dans lequel l'unité d'émetteur-récepteur est en outre configurée pour recevoir des premières informations de commande de liaison descendante d'un dispositif réseau ; et
une unité de traitement (22), configurée pour déterminer un premier groupe de bits des premières informations de commande de liaison descendante et un premier bit dans le premier groupe de bits, dans lequel les bits des premières informations de commande de liaison descendante comprennent X groupes de bits, X est un entier positif, les X groupes de bits comprennent le premier groupe de bits, et un ou plusieurs bits compris dans chacun des X groupes de bits sont associés à un ou plusieurs blocs de ressources physiques dans une bande étroite dans une largeur de bande du système, dans lequel
l'unité de traitement est en outre configurée pour déterminer, sur la base du premier bit, si les données de liaison montante sont correctement reçues, ou si de nouvelles données de liaison montante sont envoyées ;
dans lequel, lors de la détermination du premier bit dans le premier groupe de bits, l'unité de traitement est spécifiquement configurée pour :

déterminer un bloc de ressources physiques qui est occupé par les données de liaison montante et dans une bande étroite ; et
déterminer, dans un ou plusieurs bits compris dans le premier groupe de bits des premières informations de commande de liaison descendante, le premier bit associé au bloc de ressources physiques ;
dans lequel, lors de la détermination du premier groupe de bits des premières informations de commande de liaison descendante, l'unité de traitement est spécifiquement configurée pour :

déterminer, sur la base d'une relation d'association prédéfinie entre un groupe de bits et une bande étroite, un groupe de bits associé à une bande étroite dans laquelle se trouve un bloc de ressources physiques occupé par les données de liaison montante, et utiliser le groupe de bits associé en tant que premier groupe de bits ;
dans lequel
l'unité de traitement est en outre configurée pour déterminer un code de brouillage de contrôle par redondance cyclique, CRC, des premières informations de commande de liaison descendante sur la base d'un index de la bande étroite dans laquelle se trouve le bloc de ressources physiques occupé par les données de liaison montante ; et
lors de la réception des premières informations de commande de liaison descendante provenant du dispositif réseau, l'unité d'émetteur-récepteur est spécifiquement configurée pour :
désembrouiller le CRC des premières informations de commande de liaison descendante à l'aide du code de brouillage, pour obtenir les premières informations de commande de liaison descendante.

**8.** Dispositif terminal selon la revendication 7, dans lequel
l'unité d'émetteur-récepteur est en outre configurée pour recevoir des secondes informations de commande de liaison descendante provenant du dispositif réseau, dans lequel les secondes informations de commande de liaison descendante sont utilisées pour planifier les données de liaison montante, et les secondes informations de commande de liaison descendante comprennent au moins un élément parmi des informations d'indication de la quantité X des groupes de bits des premières informations de commande de liaison descendante, des informations concernant le premier groupe de bits ou des informations de décalage de bande étroite ; et
lors de la détermination du premier groupe de bits des premières informations de commande de liaison descendante, l'unité de traitement est spécifiquement configurée pour :
déterminer le premier groupe de bits des premières informations de commande de liaison descendante sur la base des secondes informations de commande de liaison descendante.

FIG. 1

FIG. 2a

PRBs in a
narrowband i

| PRB0 | PRB1 | PRB2 | PRB3 | PRB4 | PRB5 |
|---|---|---|---|---|---|

One bit group
in first DCI

| $b_0$ | $b_1$ | $b_2$ | $b_3$ | $b_4$ | $b_5$ |
|---|---|---|---|---|---|

FIG. 2b

Terminal
device

Network
device

101. Send uplink data

102. Determine a first
bit group of first DCI
and a first bit in the
first bit group

103. Send the first DCI

104. Determine the
first bit group of the
first DCI and the
first bit in the first
bit group

105. Determine,
based on the first bit,
whether the uplink
data is correctly
received or whether
new uplink data is
sent

FIG. 3

FIG. 4

FIG. 5a

EP 3 614 597 B1

FIG. 5b

```
┌─────────────┐                          ┌──────────────┐
│     UE      │                          │ Base station │
└─────────────┘                          └──────────────┘
      │                                          │
      │◄───── 301. Send RRC signaling ──────────│
      │                                          │
      │◄────── 302. Send second DCI ────────────│
      │                                          │
      │        303. Send uplink data by          │
      │─────── using a PRB indicated by ────────►│
      │           the second DCI                 │
```

304. Determine a first bit group of first DCI and a first bit in the first bit group

305. Send the first DCI

306. Determine the first bit group of the first DCI and the first bit in the first bit group based on the RRC signaling and/or the second DCI

307. Determine, based on the first bit, whether the uplink data is correctly received or whether new uplink data is sent

FIG. 6

```
┌─────────────┐                    ┌──────────────┐
│     UE      │                    │ Base station │
└─────────────┘                    └──────────────┘
       │                                   │
       │◄──── 401. Send second DCI ────────│
       │                                   │
       │   402. Send uplink data by        │
       │── using a PRB indicated by ──────►│
       │       the second DCI              │
```

403. Determine a first bit group of first DCI and a first bit in the first bit group based on a predefined association relationship between a bit group and a narrowband

```
       │◄──── 404. Send the first DCI ─────│
```

405. Determine the first bit group of the first DCI and the first bit in the first bit group based on the predefined association relationship between the bit group and the narrowband

406. Determine, based on the first bit, whether the uplink data is correctly received or whether new uplink data is sent

FIG. 7

| | | | | |
|---|---|---|---|---|
| Narrowband 15 | ↔ | | ↑ Bits of first DCI | Bit group |
| Narrowband 14 | ↔ | | | Bit group |
| Narrowband 13 | ↔ | | Bits of first DCI | Bit group |
| Narrowband 12 | ↔ | | | Bit group |
| Narrowband 11 | ↔ | | Bits of first DCI | Bit group |
| Narrowband 10 | ↔ | | | Bit group |
| Narrowband 9 | ↔ | | Bits of first DCI | Bit group |
| Narrowband 8 | ↔ | | | Bit group |
| Narrowband 7 | ↔ | | Bits of first DCI | Bit group |
| Narrowband 6 | ↔ | | | Bit group |
| Narrowband 5 | ↔ | | Bits of first DCI | Bit group |
| Narrowband 4 | ↔ | | | Bit group |
| Narrowband 3 | ↔ | | Bits of first DCI | Bit group |
| Narrowband 2 | ↔ | | | Bit group |
| Narrowband 1 | ↔ | | Bits of first DCI | Bit group |
| Narrowband 0 | ↔ | | | Bit group |

FIG. 8

FIG. 9

FIG. 10

FIG. 11

FIG. 12

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016072688 A2
- US 2016270038 A1